# EUROPÄISCHE PATENTANMELDUNG

(11) **EP 3 308 974 A1**
(43) Veröffentlichungstag der Anmeldung: **18.04.2018**
(21) Anmeldenummer: 17206114.5
(22) Anmeldetag: 02.04.2015
(51) Int. Cl.: B44C 5/04

(54) **VERFAHREN UND VORRICHTUNG FÜR DIE HERSTELLUNG VON FUNKTIONALISIERTEN TRÄGERMATERIALIEN**

(30) Priorität: 04.04.2014 EP 14163502
(62) Teilanmeldung aus: 15162402.0
(71) Anmelder: Flooring Technologies Ltd., Kalkara SCM1001 (MT)
(72) Erfinder: KALWA, Norbert, 32805 Horn-Bad Meinberg (DE)
(74) Vertreter: Maikowski & Ninnemann Patentanwälte Partnerschaft mbB

(57) **Zusammenfassung**

Die vorliegende Erfindung betrifft ein Verfahren zum Bedrucken von einem Trägermaterial, das das Aufbringen wenigstens einer Funktionsschicht auf das Trägermatieral mittels eines 3D-Druckers, und das Aufbringen wenigstens einer Dekorschicht auf die wenigstens eine Funktionsschicht mittels eines analogen Druckers, Digitaldruckers und/oder 3D-Druckers umfasst. Die Funktionsschicht kann beispielsweise ausgeführt sein als ein Latentwärmespeicher, eine Fussbodenheizung, eine Beleuchtung auf Basis von Elektrolumineszenz, als Einbruchssensor, Unfall- oder Feuermelder. Die Erfindung betrifft weiterhin eine Vorrichtung um das oben genannte Verfahren durchzuführen.

## Beschreibung

Die vorliegende Erfindung betrifft funktionalisierte Trägermaterialien, ein Verfahren für deren Herstellung und eine Vorrichtung für deren Herstellung. Die Erfindung betrifft weiterhin Produkte, die die funktionalisierten Trägermaterialien umfassen bzw. aus diesen hergestellt worden sind.

### Beschreibung

Mit einem Dekor versehene Trägermaterialien, wie z.B. Holzwerkstoffplatten, werden typischerweise als Bodenbelagselemente oder zur Verkleidung von Wänden und Decken verwendet. Hierzu wurden in der Vergangenheit die als Trägermaterialien verwendeten Holzwerkstoffplatten meist mit mindestens einem beharzten Dekorpapier beschichtet, wobei der Vielfältigkeit an verschieden gemusterten Dekorpapieren keine Grenzen gesetzt waren bzw. sind.

Als Alternative zur Verwendung von Dekorpapieren auf Holzwerkstoffplatten hat sich in der Vergangenheit das direkte Bedrucken von Holzwerkstoffplatten als Trägermaterialien entwickelt, da ein Bedrucken von Papier und dessen nachträgliches Kaschieren oder Direktbeschichten auf die Holzwerkstoffplatte entfällt.

Die hierbei hauptsächlich zum Einsatz kommenden Drucktechniken sind das Tiefdruck- und das Digitaldruckverfahren. Das Tiefdruckverfahren ist eine Drucktechnik, bei der die abzubildenden Elemente als Vertiefungen in einer Druckform vorliegen, die vor dem Druck eingefärbt wird. Die Druckfarbe befindet sich vornehmlich in den Vertiefungen und wird aufgrund von Anpressdruck der Druckform und von Adhäsionskräften auf den zu bedruckenden Gegenstand wie z.B. ein Trägermaterial übertragen. Beim Digitaldruck hingegen wird das Druckbild direkt von einem Computer in eine Druckmaschine wie z.B. einem Laserdrucker oder Tintenstrahldrucker übertragen. Dabei entfällt die Verwendung einer statischen Druckform.

Im Rahmen der technischen Weiterentwicklung der Drucktechnologie von verschiedensten Trägermaterialien wird jedoch mehr und mehr auf den Digitaldruck gesetzt. Während digitale Druckverfahren zunächst vor allem in der graphischen Industrie wie z.B. Werbeagenturen, Werbemittelhersteller oder Druckereien Anwendung fanden, zeigt sich mittlerweile, dass digitale Druckverfahren auch häufiger in anderen Industriezweigen anzutreffen sind. Hierfür gibt es zwar vielfältige Gründe, wobei sich jedoch zwei wesentliche Argumente erkennen lassen. So ermöglicht der Digitaldruck die Herstellung eines Druckbildes mit einer besonders hohen Qualität durch eine höhere Auflösung und erlaubt des Weiteren ein breiteres Anwendungsspektrum bei hoher Flexibilität.

Weiterhin sollen Produkte durch Massenfertigung einerseits preiswerter werden und andererseits wird von den Kunden eine größere Vielfalt erwartet, die sich beispielsweise in einer nahezu unendlichen Dekorvielfalt spiegelt. Ein erhebliches Problem ist dabei eine Vorhersage, die ein Hersteller z. B. von dekorativen Oberflächen für Gebrauchsgegenstände wie Laminatböden zu treffen hat, hinsichtlich der Frage, welche neuen Dekore von Kunden besonders nachgefragt werden und welche nicht.

Durch die hohe Flexibilität des Digitaldrucks ist es nicht nur möglich Papier oder Folienbahnen, sondern auch direkt Trägerplatten, wie z.B. Holzfaserplatten, zu bedrucken. Damit können auf dem Weg der Weiterveredelung zu Halbfertig- oder Fertigprodukten, wie beispielsweise Möbelplatten, Laminatböden oder Fassadenplatten einige Wertschöpfungsstufen übersprungen werden, was in einer weiteren Flexibilisierung und Vereinfachung der Fertigungsprozesse mündet.

Die dekorative Gestaltung, wie beispielsweise von Laminaten, die für Boden-, Wand- und oder Deckenbeläge Verwendung finden, erfolgt heute bereits zu einem großen Teil mit Hilfe der Digitaldruck-Technologie. Insbesondere bei Fußbodenlaminat werden beliebige Holz-, Stein- oder Phantasiedekore entweder auf Dekorpapiere oder direkt auf eine meist vorgrundierte Platte gedruckt. Als Plattenwerkstoff werden überwiegend Holzwerkstoffe, insbesondere hochdichte Holzfaserplatten (HDF) verwendet, wobei auch alternative Werkstoffe, nämlich wood plastic composites (WPC), Gipsfaser-, Zementspan-, Magnesiumoxidplatten usw. eingesetzt werden.

Zur Erstellung dieser Dekore dienen häufig Vorlagen aus der Natur, die nach einer Digitalisierung direkt oder nach einer zusätzlichen digitalen Bearbeitung mit einer Software auf die Oberflächen der Platten aufgedruckt werden.

Dabei kommen Digitaldrucker zur Anwendung, die inzwischen eine Arbeitsbreite von mehr als zwei Metern abdecken können. Solche Drucker arbeiten meist mit einem standardisierten Farbsatz (cyan, magenta, yellow und key (black), der je nach Ausstattung des Druckers mit weiteren Sonderfarben ergänzt werden kann. In Digitaldruckern wird jeweils über einen Satz Druckköpfe eine Farbe aufgebracht. Die Anzahl der zu druckenden Farben wird dabei nur durch die Anzahl der Druckkopfsätze limitiert. Die dabei verwendeten Tinten enthalten bei Anwendungen in der Holzwerkstoffindustrie als Lösemittel meist Wasser oder Acrylate, wobei die Acrylate auch gleichzeitig als Bindemittel dienen. Ausgehend von der Art der verwendeten Tinte erfolgt die Auswahl der Technologie bei der weiteren Veredelung.

In weiteren Fertigungsschritten wird entweder das bedruckte und imprägnierte Dekorpapier mit anderen Imprägnaten (Overlay und Gegenzug) auf eine Holzwerkstoffplatte (HWS) aufgepresst oder die direkt bedruckte HWS-Platte mit imprägnierten Papieren (Overlay und Gegenzug) oder mit Harzstrichen auf der Ober- und der Unterseite versehen und ebenfalls verpresst. Natürlich können auch andere Möglichkeiten zur Aufbringung einer Nutzschicht verwendet werden. Die direkt bedruckten Platten können zum Beispiel auch mit einer thermoplastischen Folie oder mit einem Lack versehen werden.

In jedem Fall wird der Digitaldruck im Bereich der Herstellung von Bodenbelägen, Wand- und oder Deckenverkleidungen konventionell ausschließlich zur Erzeugung von dekorativen Mustern verwendet. Bislang werden als weitere Funktionalität lediglich bestimmte Hinweise angebracht. Dies hat dann aber nur den Vorteil, dass im Vergleich zu einer aufgeklebten Folie mit diesem Hinweis, ein Abreiben durch Begehen wesentlich erschwert ist.

Es ist bekannt, dass mit einem Digitaldrucker auch andere Substanzen außer dekorativen farbigen Tinten auf Oberflächen aufgedruckt werden können. Diese anderen Substanzen können entweder allein oder in Kombination mit den bereits erwähnten dekorativen farbigen Tinten aufgetragen werden. Dies können beispielsweise Bindemittel zur Fixierung der bereits vorher aufgetragenen dekorative farbigen Tinten oder Effektpigmente sein, die nur an bestimmten Stellen aufgetragen werden. Auch dabei stehen bisher nur die Erzielung eines dekorativen Effekts und/oder oder die Verbesserung des dekorativen Prozesses im Vordergrund.

Die Erzeugung von anwendungsrelevanten Eigenschaften oder Zusatznutzen für den Endverbraucher stehen bisher kaum im Fokus. Durch eine solche Beschränkung gehen eine Vielzahl von Möglichkeiten zur Implementierung von zusätzlichen Produkteigenschaften und Funktionen verloren.

Demzufolge weisen herkömmliche flächige Boden-, Wand- und/oder Deckenbeläge für Innenräume zahlreiche Nachteile auf. Große Flächen in Innenbereichen werden konventionell lediglich für dekorative Zwecke genutzt. Deren Nutzung für die Integration zusätzlicher Produkteigenschaften und/oder zusätzlicher Funktionen erfolgt nicht. Beispielsweise werden solche Flächen bisher kaum für sicherheitstechnische Aspekte genutzt. Die herkömmlichen flächigen Bodenbeläge, Wand- und/oder Deckenverkleidungen weisen auch ökologische Nachteile auf. So könnte zum Beispiel der Wirkungsgrad einer Fußbodenheizung deutlich erhöht werden, wenn die Heizschicht auf der Oberseite der Elemente von Fußbodenbelägen, aber nicht wie herkömmlich darunter, angebracht ist. Dadurch ist es nicht nötig, zuerst schlechte Wärmeleiter, wie zum Beispiel Holz bzw. Materialien auf Holzbasis, erwärmen zu müssen, bevor die Wärmeübertragung von der Fußbodenheizung in die Innenräume erfolgen kann. Dies führt zu einer signifikanten Energieeinsparung und zur Verbesserung der Energiebilanz in den entsprechenden Innenraumbereichen.

Es besteht daher ein sehr großer Bedarf, dekorative Flächen in Innenräumen mit zusätzlichen Funktionen auszustatten.

Der Erfindung liegt daher die technische Aufgabe zu Grunde, dekorative flächige Bodenbeläge, Wand- und/oder Deckenverkleidungen für Innenräume zu funktionalisieren, d.h. solche Zusatzfunktionen zu implementieren, die einzeln oder zusammen mit in den Innenräumen anliegenden Informationssystemen vernetz- und bestenfalls mit vorhandenen informationsverarbeitenden Geräten, beispielsweise einem Smartphone, steuerbar ausgeführt sind. Zudem soll die Applikation solcher Zusatzfunktionen leicht in vorhandene Fertigungsabläufe integrierbar und/oder mit diesen verknüpfbar sein.

Gelöst wird diese Aufgabe durch die Verwendung von an sich bekannten industriell einsetzbaren Druckern und Druckverfahren, wie zum Beispiel von analogen Druckverfahren oder Digitaldruckverfahren, für das Auftragen von funktionellen Bahnen und/oder Schichten. Geeignete analoge Drucker im Sinne der vorliegenden Erfindung sind insbesondere Tintenstrahldrucker und geeignete analoge Druckverfahren sind beispielsweise Siebdruck oder der indirekte Tiefdruck. Die Aufgabe der Erfindung wird vorzugsweise gelöst durch die Verwendung des an sich bekannten Digitaldruckers oder des an sich bekannten 3D- Druckers.

Der Siebdruck ist ein Druckverfahren, bei dem die Druckfarbe mit einer Gummirakel durch ein feinmaschiges Gewebe hindurch auf das zu bedruckende Material gedruckt wird. An denjenigen Stellen des Gewebes, wo dem Druckbild entsprechend keine Farbe gedruckt werden soll, werden die Maschenöffnungen des Gewebes durch eine Schablone farbundurchlässig gemacht. Dem Fachmann ist bekannt, dass im Siebdruckverfahren viele verschiedene Materialien bedruckt werden können, wie zum Beispiel Papiererzeugnisse, Kunststoffe, Textilien, Keramik, Metall, Holz und Glas. Dazu werden je nach Material spezielle Druckfarben eingesetzt. Ein wesentlicher Vorteil des Siebdrucks besteht darin, dass durch verschiedene Gewebefeinheiten der Farbauftrag variiert werden kann, so dass hohe Farbschichtdicken erreicht werden können.

Das indirekte Tiefdruckverfahren ist eine Drucktechnik, bei der die abzubildenden Elemente als Vertiefungen in einer Druckform, beispielsweise einer Walze, vorliegen. Die gesamte Druckform wird vor dem Druck eingefärbt und die überschüssige Farbe danach mit einer Rakel oder einem Wischer entfernt, so dass sich die Druckfarbe nur noch in den Vertiefungen befindet. Ein hoher Anpressdruck und die Adhäsionskräfte zwischen Papier und Farbe bewirken die Farbübertragung.

Digitaldruck bezeichnet eine Gruppe von Druckverfahren, bei denen das Druckbild direkt von einem Computer in eine Druckmaschine übertragen wird, ohne dass eine statische Druckform benutzt wird. Bei dem Drucksystem handelt es sich meist um ein elektrofotografisches Drucksystem wie einen Laserdrucker. Auch andere Verfahren finden Verwendung, beispielsweise Tintenstrahldruck. Einen großen Bereich nehmen die industriellen Systeme ein. Auch im Großformat werden zunehmend digitale Tintenstrahlsysteme eingesetzt, die annähernd Offsetdruckqualität auf den verschiedensten Bedruckstoffen ermöglichen. Hier wird mit dem flüssigen Electro-Ink-Verfahren Druckfarbe auf das Material aufgebracht. Bei dieser Produktionsart werden Druckbreiten von bis zu 5 Metern erzielt. Diese sind meistens Rollensysteme, auf denen wetterfeste Materialien (z.B. PVC-Banner, Meshgewebe, Canvas-Leinen, etc.) bedruckt werden. Die neueste Generation der Digitaldrucksysteme stellt der "Plattendirektdruck" dar. Auf diesem System können starre Materialien meistens im UV-Inkjet-Verfahren bedruckt werden. Je nach System ist der Bedruckstoff nur von der Dicke her relevant. Es können Materialien wie z.B. Kunststoffe, Holz, Glas, Metalle, Stein, Papier usw. bedruckt werden.

Vorzugsweise werden die Funktionsschichten gemäß der vorliegenden Erfindung im Plattendirektdruckverfahren mittels eines Tintenstrahldrucker auf die Holzwerkstoffplatten aufgedruckt.

Dabei werden über einen oder mehrere Sätze von Druckköpfen parallel oder nacheinander voll- und/oder teilflächig Funktionsschichten aufgebracht. Diese Funktionsschichten können einzeln oder in Kombination funktionieren. Der Auftrag der Funktionsschichten kann als Aufdruck entweder auf einer großformatigen Platte oder auf einem bereits vorformatierten Paneel erfolgen.

Die für die Funktion notwendigen Materialien können dabei in eine Flüssigkeit eingearbeitet sein. Es ist aber auch möglich, dass die verwendete Tinte selbst die Funktionsschicht darstellt. Eine weitere Möglichkeit ist, dass die Flüssigkeit lediglich zur homogeneren Verteilung der Funktionsschicht dient und nach dem Auftrag verdunstet oder abtragbar ist. Falls nötig kann die Tinte auch ein Bindemittel enthalten.

Bei Bedarf kann der Auftrag auch durch einen 3D-Drucker erfolgen. Dies trifft vor allem dann zu, wenn höhere Schichtdicken realisiert werden und/oder räumliche Strukturen erzeugt werden sollen.

Ein 3D-Drucker ist ein Drucker, der dreidimensionale Werkstücke aufbaut. Der Aufbau erfolgt computergesteuert aus einem oder mehreren flüssigen oder festen Werkstoffen nach vorgegebenen Maßen und Formen. 3D-Drucker dienten zunächst vor allem der Herstellung von Prototypen und Modellen, dann der Herstellung von Werkstücken, von denen nur geringe Stückzahlen benötigt werden. Zunehmen werden 3D-Drucker auch für die Massenproduktion von Werkstücken eingesetzt. Konventionelle 3D-Drucker haben nur mit einem Werkstoff oder einer Werkstoffmischung und einem Druckverfahren gearbeitet. Es wurden aber bereits kombinierte Druckverfahren erprobt, bei denen Werkstücke aus mehreren Werkstoffen gedruckt wurden. Beispielsweise ist das Drucken von Kunststoffen in unterschiedlichen Härtegraden und Farben inzwischen auch simultan möglich. Dies macht Prozesse, die bisher mehrere Fertigungsschritte benötigten, in einem Arbeitsgang durchführbar.

Im Stand der Technik sind zahlreiche 3D-Druck Verfahren bekannt, die prinzipiell in den Verfahren zur Herstellung funktionalisierter flächiger Bodenbeläge, Wand- und/oder Deckenverkleidungen für Innenräume gemäß der vorliegenden Erfindung anwendbar sind.

Dazu gehören Sinter- und Pulverdruckverfahren, beispielsweise von Gipspulver bzw. wie das selektive Lasersintern, selektive Laserschmelzen, Elektronenstrahlschmelzen, Fused Deposition Modeling und das Laserauftragsschweißen. Besonders weit verbreitet sind Stereolithographieverfahren, wie zum Beispiel das Film Transfer Imaging und das Digital Light Processing. Es werden aber auch bereits Verfahren zum Drucken mit flüssigen Materialien eingesetzt. Hierzu gehören beispielsweise das Multi-Jet Modeling und PolyJet Verfahren. Weitere 3D-Druck Verfahren umfassen das Laminated Object Modeling, den Polyamidguss, Space Puzzle Moulding und Contour Crafting.

Besonders bevorzugt für die Anwendung in den in den Verfahren zur Herstellung funktionalisierter flächiger Bodenbeläge, Wand- und/oder Deckenverkleidungen für Innenräume gemäß der vorliegenden Erfindung sind Druckverfahren, vorzugsweise analoge Druckverfahren wie Siebdruck oder indirekter Tiefdruck, besonders bevorzugt Digitaldruckverfahren, insbesondere 3D-Druckverfahren, mit flüssigen Materialien. Das hierzu zählende Multi-Jet Modeling (MJM) Verfahren erinnert stark an einen herkömmlichen Tintenstrahldrucker. Beim Multi-Jet Modeling wird flüssiges Material aus einer Düse aufgetragen, die sich in x- und y-Richtung bewegen kann. Sobald das Material austritt wird es unter UV-Licht gehärtet. Die Genauigkeit des Multi-Jet Modeling Verfahrens ist sehr hoch. Als Werkstoffe werden beispielsweise Thermoplaste oder UV-empfindliche Flüssigkunststoffe eingesetzt.

Beim PolyJet Verfahren, einem weiteren 3D-Druck Verfahren mit flüssigen Materialien, nutzt der Drucker zwei oder mehr Druckköpfe, die das eigentliche Baumaterial applizieren. Gleich danach werden die Photopolymere mittels UV-Licht gehärtet. Werden mehr als zwei Druckköpfe eingesetzt können sogar Objekte aus unterschiedlichen Materialien hergestellt werden. Mit diesem Verfahren ist die gleichzeitige Verarbeitung von Materialien, die unterschiedliche Eigenschaften aufweisen, wie beispielsweise eine unterschiedliche Härte oder verschiedene Farben, bei ein und demselben Objekt möglich. Die Genauigkeit der PolyJet Verfahren ist sehr hoch und es ist die Erzeugung von Objekten mit sehr dünne Wandstärken möglich. Als Werkstoffe werden lichtempfindliche Flüssigkunststoffe, sogenannte PolyJet-Photopolymere eingesetzt. Mit PolyJet-Photopolymeren lassen sich in dünnen Schichten eine Vielzahl an Materialeigenschaften erzeugen. Die additive Fertigung mit umfassender Multimaterial-Flexibilität ist möglich. Es können verschiedene Materialien im gleichen 3D-Modell oder im gleichen Arbeitsschritt kombiniert werden und es besteht eine Fülle an Möglichkeiten wie beispielsweise Overmoulding, Erzeugung von Grautönen und gleichzeitiges Drucken in unterschiedlichen Materialien. Während des Drucks können außerdem aus zwei Materialien Verbundmaterialien bzw. Digital Materials mit einzigartigen Eigenschaften herstellt werden.

Ein weiteres 3D-Druck Verfahren, das in den Verfahren zur Herstellung funktionalisierter flächiger Bodenbeläge, Wand- und/oder Deckenverkleidungen für Innenräume gemäß der vorliegenden Erfindung anwendbar ist, ist das Laminated Object Modeling (LOM). Beim LOM werden extrem dünne Schichten unterschiedlichen Materials miteinander verklebt. Die Genauigkeit der LOM Verfahren ist sehr hoch. Als Werkstoffe werden beispielsweise Kunststoffe, Keramik, Papier und Aluminium eingesetzt.

Nach dem Auftrag der Funktionsschicht, zum Beispiel mit einem der zuvor genannten Digitaldruck- bzw. 3D-Druckverfahren, wird die großformatige Holzwerkstoffplatte oder das Paneel mit einer Schutzschicht versehen. Dabei kann es sich um eine duroplastische Beschichtung, eine Lackierung, eine thermoplastische Beschichtung usw. handeln. Diese kann in einer Presse oder einer Lackstrasse aufgetragen werden.

Im Fall der großformatigen Platte können dann kleinformatige Elemente, Paneele usw. z.B. durch Fräsen erzeugt werden. Dabei können auch die Kontaktstellen zur Verbindung der einzelnen Elemente miteinander bzw. zur Vernetzung mit vorhandenen Systemen aufgebracht werden. Dies kann ebenfalls durch ein Druckverfahren oder durch Anbringen von leitfähigen Folien usw. geschehen. Die Anbindung an Steuerungssysteme kann dann über jede mögliche Art eines herkömmlichen Adapters, wie zum Beispiel WLAN-Adapter, NFC-Chip, RFID oder Bluetooth-Modul erfolgen.

In einer bevorzugten Ausführungsform kann Strom durch eine Substanz übertragen werden, die eine genügend hohe Leitfähigkeit besitzt. Diese kann beispielsweise in einer Tasche unterhalb der Oberfläche der Platte bzw. kleinformatigen Elemente oder in der Fase platziert sein. Die Leitfähigkeit kann zum Beispiel durch Ruß oder Salze erzeugt werden. Es können aber auch leitfähige Polymere eingesetzt werden. Auch eine Kombination aus diesen ist möglich.

Bevorzugte Substanzen, die mit leitfähigen Substanzen ausgerüstet werden können, sind beispielsweise ausgewählt aus:
- Acrylatlacke (Fase)
- PU-Lacke (Fase)
- Polyolefin-Haftschmelzkleber (Leimtasche)
- Polythiophene, Polypyrrole (Fase)

In Klammern ist jeweils die bevorzugte Anwendung aufgeführt:
Bei dem Aufbringen auf die Fase kann nachträglich noch eine Versiegelung gegen Abrieb/Verschmutzung aufgetragen werden. Diese Versiegelung kann zum Beispiel durch ungefüllte Lacke erfolgen.

Vorzugsweise werden solche Substanzen verwendet, die zähelastisch aushärten, sodass auch bei Dimensionsänderungen der Holzwerkstoffträgerplatte auf Grund von Schrumpfen oder Quellen bei Änderung der Umgebungsfeuchte noch ein ausreichender Kontakt zwischen den einzelnen Platten erhalten bleibt.

Es ist möglich, die verschiedensten Funktionsschichten mit dem erfindungsgemäßen Verfahren aufzubringen. Vorteilhaft dabei ist, dass mit einem Digitaldrucker und/oder einem 3D-Drucker üblicherweise in einer Tinte nur Partikel im Nanometerbereich aufgetragen werden können. Dies ist im Hinblick auf zu erwartende Kosten für die Funktionsschichten von erheblichem Vorteil, da pro Flächeneinheit nur wenig Material aufgebracht werden muss, welches üblicherweise teuer ist.

Eine Liste von Beispielen für Funktionsschichten, auf die die vorliegende Erfindung aber nicht beschränkt sein soll, umfasst:
- ein Latentwärmespeicher mit Phasenwechselmaterialien,
- eine Fussbodenheizung auf Basis einer Widerstandsheizung,
- eine Beleuchtung auf Basis von Elektrolumineszenz, wie z.B. zinksulfidische Luminophore,
- Einbruchssensor auf Basis piezoelektrischer Elemente,
- Farbanpassung auf Basis thermochromer Pigmente,
- Unfall-/Einbruchsmelder auf Basis piezochromer Pigmente,
- Feuermelder auf Basis Widerstandsänderung.

In einer besonders bevorzugten Ausführungsform der Erfindung können die Funktionsschichten auch zur Datenübertragung bzw. Datenweiterleitung genutzt werden. Es ist beispielsweise möglich, die Funktionsschichten an ein vorhandenes Computernetzwerk anzubinden.

EP 2 116 778 A1 offenbart eine Vorrichtung zur Erzeugung von Funktionsschichten auf Trägermaterialien mittels einem analogen oder digitalen Drucker, wobei als Funktionsschicht lediglich ein elektrisches Heizmittel aufgetragen wird. EP 2 116 778 A1 offenbart auch ein mit dieser Vorrichtung erzeugtes beheizbares Belagssystem für Fußböden, Decken und Wände, dadurch gekennzeichnet, dass die elektrischen Heizmittel eine Armierungslage umfassen, die zumindest teilweise in der elektrische leitenden Schicht eingebettet ist, wobei die Armierungslage bevorzugt ein Vlies, Papier, Gewebe oder ein Netzgitter ist.

Für die Ausübung der Funktion gemäß der vorliegenden Erfindung ist es jedoch nicht notwendig, dass die Funktionsschichten eine Armierungslage umfassen, die in der elektrisch leitenden Schicht eingebettet ist.

In einer besonders bevorzugten Ausführungsform umfasst die vorliegende Erfindung deshalb Funktionsschichten, ausgewählt aus:
- ein Latentwärmespeicher mit Phasenwechselmaterialien,
- eine Fussbodenheizung auf Basis einer Widerstandsheizung,
- eine Beleuchtung auf Basis von Elektrolumineszenz, wie z.B. zinksulfidische Luminophore,
- Einbruchssensor auf Basis piezoelektrischer Elemente,
- Farbanpassung auf Basis thermochromer Pigmente,
- Unfall-/Einbruchsmelder auf Basis piezochromer Pigmente,
- Feuermelder auf Basis Widerstandsänderung.
wobei die Funktionsschichten keine Armierungslage umfassen, die ganz oder teilweise in der elektrisch leitenden Schicht eingebettet sind.

Das erfindungsgemäße Verfahren nutzt die an sich bekannten Verfahren zur Herstellung gedruckter Elektronik. Gedruckte Elektronik bezeichnet elektronische Bauelemente, Baugruppen und Anwendungen, die vollständig oder teilweise mittels Druckverfahren hergestellt werden. Anstelle der Druckfarben werden elektronische Funktionsmaterialien, die in flüssiger oder pastöser Form vorliegen, verdruckt. Für die gedruckte Elektronik werden sowohl organische als auch anorganische Materialien verwendet. Diese Materialien liegen vorzugsweise in flüssiger Form, d. h. als Lösung, Dispersion oder Suspension, vor. Dies trifft insbesondere auf viele organische Funktionsmaterialien, die als Leiter, Halbleiter oder Isolatoren verwendet werden, zu. In der Regel handelt es sich bei den anorganischen Materialien um Dispersionen von metallischen Mikro- oder Nanopartikeln. Geeignete Nanopartikel können beispielsweise eine leitfähige Beschichtung auf einem nicht leitfähigen Kern aufweisen. Zu den am häufigsten in der gedruckten Elektronik verwendeten Materialien zählen die leitfähigen Polymere Poly-3,4-ethylendioxythiophen, das mit Polystyrensulfonat dotiert wird, Polypyrrol und Polyanilin. Beide Polymere sind kommerziell in verschiedenen Formulierungen erhältlich. Alternativ werden Silber-, Gold- und oder Kupfer-Nanopartikel verwendet. Neben den polymeren und metallischen Materialien rückt zudem auch der Kohlenstoff als robustes Material für gedruckte elektronische Anwendungen in den Fokus dieser Technologie. Zahlreiche polymere Halbleiter werden im Inkjetdruck prozessiert. Beispiele für polymere Halbleiter sind Poylthiophene wie Poly(3-Hexylthiophen) und Poly-9,9-dioctylfluorencobithiophen. Druckbare organische und anorganische Isolatoren bzw. Dielektrika existieren in großer Zahl und können in verschiedenen Druckverfahren verarbeitet werden.

Ein Latentwärmespeicher ist eine Einrichtung, die thermische Energie verborgen, verlustarm, mit vielen Wiederholzyklen und über lange Zeit speichern kann. Man nutzt dazu sogenannte Phasenwechselmaterialien, deren latente Schmelzwärme, Lösungswärme oder Absorptionswärme wesentlich größer ist als die Wärme, die sie aufgrund ihrer normalen spezifischen Wärmekapazität, d.h. ohne den Phasenumwandlungseffekt speichern können. Moderne Latentwärmespeichermaterialien haben für verschiedene Anwendungen entwickelte physikalische Eigenschaften und sind für nahezu alle Temperaturbereiche erhältlich. Bei den Phasenwechselmedien setzt ein Phasenübergang von flüssig nach fest Wärme frei. Bei dem Phasenübergang von fest nach flüssig nehmen die Phasenwechselmedien Wärmeenergie auf und speichern diese. Auf Basis von Paraffinen werden bereits heute Phasenwechselmedien zur passiven Gebäudeklimatisierung eingesetzt. Neben den Paraffinen sind auch bestimmte ionische Flüssigkeiten, als Phasenwechselmedien geeignet.

Im Rahmen der vorliegenden Erfindung werden die Latentwärmespeicher als Funktionsschicht in die funktionalisierten flächigen Bodenbeläge, Wand- und/oder Deckenverkleidungen für Innenräume eingebracht. Die Einzelelemente bzw. auch die gesamten Bodenbeläge, Wand- und/oder Deckenverkleidungen, vorzugsweise Bodenbeläge und/oder Wandverkleidungen sind so als Fußbodenheizungen und/oder Wandheizungen nutzbar. Bei Deckenverkleidungen kann der Effekt der Wärmespeicherung dahingehend ausgenutzt werden, dass der Raumluft Wärme entzogen wird. Die funktionalisierten Deckenverkleidungen der Erfindung sind somit als Kühldecken einsetzbar. Die funktionalisierten flächigen Bodenbeläge, Wand- und/oder Deckenverkleidungen sind vorzugsweise wärmetechnisch an den Innenraum ankoppelbar, d.h. an herkömmliche Steuerungssysteme anbindbar.

Alle elektrischen Widerstandsheizungen funktionieren nach dem gleichen Muster: Durch einen Heizwiderstand in Form eines Drahtes, der prinzipiell aus jeglichem leitenden Metall bestehen kann, wird Strom geleitet. Die dabei gewonnene Wärmeleistung richtet sich nach dem sogenannten ohmschen Gesetz, welches die Abhängigkeit der Wärmeleistung vom Stromfluss und vom Widerstandswert des jeweiligen Metalls beschreibt. Bei der Herstellung des Widerstandsdrahtes werden in der professionellen Fertigung Legierungen verwendet, die bestimmte, für die Wärmeerzeugung ideale Voraussetzungen bieten. Hierbei bilden die Konstanz des elektrischen Widerstandes, die Höhe des Schmelzpunktes und die Resistenz gegenüber Oxidation wesentliche Kriterien.

Elektroeinzelheizungen, die nicht die Möglichkeit der Speicherung von Wärme aufweisen, werden häufig auch als Direktheizungen bezeichnet. Die erzeugte Elektrowärme wird hier unmittelbar nach Einschalten des Gerätes zur Verfügung gestellt. Auch Flächenheizungen sind Direktheizungen. Zum Einsatz kommen sie z. B. als Fußbodenheizungen. Konventionell werden Heizkabel, Heizmatten oder Heizfolien in den Boden eingelassen.

Gemäß der vorliegenden Erfindung sind die elektrischen Widerstandsheizungen als Funktionsschicht in die flächigen Bodenbeläge, Wand- und/oder Deckenverkleidung für Innenräume einarbeitbar. Vorzugsweise wird als Funktionsschicht mit dem erfindungsgemäßen Verfahren wenigstens eine dünne Schicht eines leitenden Metalls auf eine Holzwerkstoffplatte aufgebracht. Die funktionalisierten flächigen Bodenbeläge, Wand- und/oder Deckenverkleidungen, die solch eine Widerstandsheizung aufweisen, sind vorzugsweise wärmetechnisch an den Innenraum ankoppelbar, d.h. an herkömmliche Steuerungssysteme anbindbar. Ein besonderer Vorteil der Integration der Widerstandsheizung als Funktionsschicht auf den Elementen auf Basis von Holzwerkstoffen gemäß der Erfindung besteht darin, dass die Funktionsschicht direkt unter der Nutzschicht und nicht auf der Rückseite der Elemente oder darunter angeordnet ist, da Holz ein thermischer Isolator ist. Durch diese Anordnung kann die Wärme direkt an die Raumluft der Innenräume abgegeben werden.

Es ist auch denkbar, dass die funktionalisierten flächigen Bodenbeläge, Wand- und/oder Deckenverkleidungen der Erfindung mehrere Funktionsschichten umfassen, wobei die Funktionsschichten gleich oder unterschiedlich sein können. In einer weiteren Ausführungsform können flächige Bodenbeläge, Wand- und/oder Deckenverkleidungen, die beispielsweise unterschiedliche Funktionsschichten umfassen, zur Steuerung eines angenehmen Raumklimas in Innenräumen miteinander kombiniert werden. So kann der Bodenbelag gemäß der Erfindung als Funktionsschicht eine Fußbodenheizung auf Basis einer Widerstandsheizung umfassen, und in den Wand- und Deckenverkleidungen kann die Funktionsschicht beispielsweise als Latentwärmespeicher ausgeführt sein. In einer so kombinierten Ausführungsform können die Fußboden- und Wandverkleidungen zur Erwärmung der Raumluft konzipiert sei, wohingegen die Deckenverkleidungen bei unerwünscht hoher Raumtemperatur zur Kühlung der Raumluft der Innenräume eingesetzt werden kann. Durch die Möglichkeit der Ankopplung der Bodenbeläge, Wand- und/oder Deckenverkleidungen gemäß der Erfindung an herkömmliche Steuerungssysteme ist das Raumklima in Innenräumen automatisch steuerbar. So kann z. B. die Steuerung der in den Bodenbelag integrierten Fußbodenheizung über ein in der Steuerung hinterlegten Zyklus erfolgen bzw. auch im Laufe des Tages noch aktuellen Bedürfnissen angepasst werden. Es kann morgens die Temperatur abgesenkt werden, wenn niemand im Hause ist. Am Nachmittag kann die Temperatur dann wieder angehoben werden, bevor die Bewohner wieder nach Hause kommen. Auch kann durch eine Vernetzung mit einem Außentemperaturfühler eine Anpassung an klimatische Veränderungen vorgenommen werden. Dies ist besonders interessant, wenn die Bewohner wegen eines Urlaubs oder einer berufsbedingten Abwesenheit, längere Zeit nicht in der Wohnung sind.

Unter Elektrolumineszenz (EL) versteht man die direkte Lumineszenzanregung von Leuchtpigmenten (auch Leuchtsubtanzen oder Luminophore genannt) durch ein elektrisches Wechselfeld. Die Elektrolumineszenz-Technologie hat in jüngster Zeit zunehmend an Bedeutung gewonnen. Sie ermöglicht die Realisierung beinahe beliebig großer, blend- und schattenfreier, homogener Leuchtflächen. Dabei sind Leistungsaufnahme und Bautiefe (in der Größenordnung eines Millimeters und darunter) äußerst gering. Zu den typischen Anwendungen gehört neben der Hintergrundbeleuchtung von Flüssigkristall-Displays auch die Hinterleuchtung von transparenten Filmen, welche mit Beschriftungen und/oder Bildmotiven versehen sind. Somit sind transparente Elektrolumineszenz-Elemente, wie beispielsweise Elektrolumineszenz-Leuchtplatten auf der Basis von Glas oder transparentem Kunststoff, die beispielsweise als Informationsträger, Werbetransparente oder zu dekorativen Zwecken dienen können, aus dem Stand der Technik bekannt.

Elektrolumineszenz-Elemente sind in einer weiteren Ausführungsform in wenigstens eine Funktionsschicht der erfindungsgemäßen flächigen Bodenbeläge, Wand- und/oder Deckenverkleidungen integrierbar. Das EL-Element besteht aus mindestens einem Substrat und mindestens einer EL-Anordnung, welche vorzugsweise durch die Digitaldruck-oder 3D-Druckverfahren der Erfindung, aber beispielsweise auch durch Rakeln, Spritzen, Sprühen und/oder, Streichen hergestellt werden kann. Hierzu kann man eine Holzwerkstoffplatte zuerst mit einer transparenten Elektrode beschichten, beispielsweise durch Aufdrucken mittels Digital- oder 3D-Drucker, auf die dann eine Leuchtschicht (Elektrolumineszenz-Schicht), erneut unter Anwendung der Digitaldruck-oder 3D-Druckverfahren aufgetragen wird. Abschließend können dann eine Isolationsschicht (dielektrische Schicht) und eine weitere Elektrode auf der Leuchtschicht angeordnet werden. Das Aufbringen dieser Schichten kann ebenfalls mit einem Digital- oder 3D-Drucker erfolgen.

Den Grundaufbau eines Elektrolumineszenz-Elements bilden zwei leitende Schichten (Elektroden), zwischen denen, elektrisch isoliert, das elektrolumineszente Material liegt. Eine Elektrode ist lichtdurchlässig und besteht meist aus mit Indiumzinnoxid beschichteter Kunststofffolie. Die zweite Folie reflektiert das Licht.

Das Elektrolumineszenz-Element ist vorzugsweise so gestaltet, dass die Seite der Holzwerkstoffplatte, die mit der Elektrolumineszenz-Anordnung versehen ist, leuchtet. Das Elektrolumineszenz-Element kann erfindungsgemäß aus folgenden Schichten aufgebaut sein
a) einem Substrat, vorzugsweise einer Holzwerkstoffplatte,
b) mindestens einer auf das Substrat aufgebrachten EL-Anordnung, umfassend die folgenden Komponenten
   ba) eine zumindest teilweise transparente Elektrode, als Frontelektrode,
   bb) gegebenenfalls eine erste Isolationsschicht,
   bc) eine Schicht, enthaltend mindestens ein durch ein elektrisches Feld anregbares Leuchtpigment (Elektroluminophor), Elektrolumineszenz-Schicht oder Pigmentschicht genannt,
   bd) gegebenenfalls eine weitere Isolationsschicht,
   be) eine Rückelektrode,
   bf) eine Leiterbahn oder mehrere Leiterbahnen, zur elektrischen Kontaktierung von sowohl der Frontelektrode als auch der Rückelektrode, wobei die Leiterbahn oder die Leiterbahnen vor, nach oder zwischen den Front - und Rückelektroden aufgebracht werden kann bzw. können. Die Leiterbahn oder Leiterbahnen können in Form eines Metallbusses, beispielsweise eines Silberbusses, vorzugsweise hergestellt aus einer Metallpaste, beispielsweise einer Silberpaste und/oder eines Metalllacks, beispielsweise eines Silberlacks, aufgebracht sein. Eventuell kann vor dem Aufbringen des Metallbusses noch eine Graphitschicht aufgebracht werden,
c) einer Schutzschicht oder einer Folie.

Vorzugsweise werden die einzelnen Elemente des Elektrolumineszenz-Elements einschließlich des Metallbusses mittels dem erfindungsgemäßen Digital- oder 3D-Druckverfahren auf die Holzwerkstoffplatte aufgebracht.

Bei dem anregbaren Leuchtpigment (Elektroluminophor) handelt es sich vorzugsweise um Zinksulfid, das mit verschiedenen Metallen wie Mangan (ZnS:Mn), Gold, Silber, Kupfer oder Gallium dotiert ist. Es sind verschiedene Lichtfarben erzeugbar, weißes Licht wird meist durch die Überlagerung bunt leuchtender Pigmente erzeugt.

Es ist bekannt, dass die Beleuchtung in Innenräumen zum Wohlbefinden beitragen kann. Durch die Integration der Elektrolumineszenz-Elemente in wenigstens eine Funktionsschicht von Elementen der erfindungsgemäßen flächigen Bodenbeläge, Wand- und/oder Deckenverkleidungen können leuchtende Elemente erhalten werden, deren Leuchtkraft auf Grund der möglichen Anbindung an eine Steuereinheit anpassbar ist. Die Leuchtkraft kann zum Beispiel morgens und abends gedämpft werden und tagsüber stärker leuchtend eingestellt sein. Mittels der Steuereinheit kann eine Ansteuerung der Elemente erfolgen, um beispielsweise einen Partymode einzustellen, indem einige oder alle Elemente blinken. Dadurch können die verschiedensten Bedürfnisse der Nutzer von Innenräumen erfüllt werden.

Die Piezoelektrizität beschreibt die Änderung der elektrischen Polarisation und somit das Auftreten einer elektrischen Spannung an Festkörpern, wenn sie elastisch verformt werden (direkter Piezoeffekt). Umgekehrt verformen sich Materialien bei Anlegen einer elektrischen Spannung (inverser Piezoeffekt). Piezoelektrische Sensoren arbeiten mit dem piezoelektrischen Effekt und haben sich als universelles Instrument zum Messen verschiedener Prozesse erwiesen. Sie werden für die Bestimmung von Druck, Beschleunigung, Spannung, Kraft oder als Gassensor in der Qualitäts- sowie in der Prozesskontrolle eingesetzt. Besonders bevorzugt im Rahmen der vorliegenden Erfindung sind piezoelektrische Sensoren, die auf Druck reagieren.

Für piezoelektrische Drucksensoren wird eine dünne Membran und einer massiven Basis verwendet, um sicherzustellen, dass der Druck die Elemente gezielt in einer Richtung belastet. Die dünne Membran wird insbesondere deshalb verwendet, um die Kraft zu den Elementen zu führen.

Für piezoelektrische Sensoren werden zwei wesentliche Materialgruppen eingesetzt: piezoelektrische Keramiken und einkristalline Materialien. Bevorzugt für die Zwecke der vorliegenden Erfindung sind einkristalline Materialien, wie Quarz, Turmalin und Galliumphosphat. Diese weisen den Vorteil auf, dass sie wesentlich höhere und nahezu unendliche - Langzeitstabilitäten haben als piezoelektrische Keramiken. Die einkristallinen Materialien sind vorzugsweise mit den erfindungsgemäßen Digital- oder 3D-Druckverfahren einsetzbar, mit denen dünne Schichten des piezoelektrischen Materials als Funktionsschicht auf Holzwerkstoffe aufgebracht werden können. Die so beschichteten Elemente der erfindungsgemäßen flächigen Boden-, Wand- und/oder Deckenbeläge für Innenräume sind über jede mögliche Art eines herkömmlichen Adapters, wie zum Beispiel WLAN-Adapter, NFC-Chip, RFID oder Bluetooth-Modul, an Steuerungssysteme oder Überwachungssysteme anbindbar. Dadurch können auftretende Druckänderungen, wie sie z.B. beim Betreten eines Bodenbelags auftreten, überwacht, aufgezeichnet und dazu verwendet werden, um ein Signal, vorzugsweise ein Alarmsignal, auszulösen.

In einer besonders bevorzugten Ausführungsform können die erfindungsgemäßen flächigen Boden-, Wand- und/oder Deckenbeläge für Innenräume, die in wenigstens einer Funktionsschicht ein piezoelektrisches Material umfassen, als Einbruchssensoren, beispielsweise integriert in ein Einbruchsüberwachungssystem, verwendet werden.

In einer weiteren Ausführungsform können in wenigstens einer Funktionsschicht der erfindungsgemäßen flächigen Boden-, Wand- und/oder Deckenbeläge für Innenräume organische und/oder anorganische farbgebende Pigmente wobei die Pigmente mindestens einen Stoff oder mindestens eine Stoffzusammensetzung enthalten, dessen/deren Farbe durch eine Veränderung einer auf die Pigmente einwirkenden physikalischen Größe veränderbar ist. Derartige Stoffe oder Stoffzusammensetzungen können hydrochrome, piezochrome, photochrome, thermochrome oder phosphoreszierende Farbstoffe sein. Auf diese Weise ist eine Farbveränderung der Beschichtung der Holzwerkstoffplatten und der daraus hergestellten Elemente für Bodenbeläge, Wand- und/oder Deckenverkleidungen durch eine Veränderung des Feuchtigkeitsgehaltes, der Temperatur oder des Drucks möglich.

Vorzugsweise enthält die wenigstens eine Funktionsschicht neben den farbgebenden Pigmenten auch ein Bindemittel zur Fixierung der Farbpigmente auf dem Trägermaterial, wie zum Beispiel einer Holzwerkstoffplatte. Das Bindemittel kann sowohl ein anorganisches als auch ein organisches Mittel oder eine Mischung daraus sein. Häufig finden kunstharzenthaltende Bindemittel Anwendung.

Bei der Verwendung von photochromen Farbstoffen kann gezielt durch eine Lichteinstrahlung im ultravioletten oder im infraroten Wellenlängenbereich eine Farbänderung der Pigmente oder Beschichtungen aktiviert werden, woraus sich dekorative Lichteffekte ergeben können. Beispielsweise ist das, eventuell kurzzeitige, Anstrahlen von Flächen, die dekorative Darstellungen aus Füllstoffen mit photochromen Farbstoffen beinhalten, mit ultraviolettem Licht denkbar, um interessante Wiedergabeeffekte bei Feierlichkeiten und Festivitäten zu erreichen.

Zur Erhöhung eines Sicherheitsstandards innerhalb von Gebäuden ist die Verwendung von Stoffen oder Stoffzusammensetzungen mit mindestens einem phosphoreszierenden Farbstoff zur Durchführung eines Nachleuchteffektes bei vorangegangener einfallender Lichtstrahlung denkbar. Sofern derartige Stoffe als Pigmente innerhalb des Fußbodens und/oder den Wänden linien- oder pfeilartig mit eingearbeitet worden sind, kann beispielsweise ein Fluchtweg selbst nach einem Ausfall der Lichtelektrizität durch den Nachleuchteffekt angezeigt werden, wenn ein Notfall eintritt. Aufgrund der Integration der Füllstoffe innerhalb des Fußboden- und Wandmaterials ist dieser Effekt dauerhaft vorhanden, ohne dass zusätzlich angebrachte nachleuchtende Klebebänder oder ähnliches ersetzt werden müssen. Dies trifft beispielsweise für eine Verwendung in Krankenhäusern oder ähnlichen öffentlichen Einrichtungen zu.

Ähnlich hilfreiche Nachleuchteffekte lassen sich durch die Verwendung der erfindungsgemäßen Farbstoffe auch in Schildern, Außenhauswänden und ähnlichem erreichen.

Die Verwendung piezochromer Farbstoffe ermöglicht eine Farbveränderung in Abhängigkeit von einer mechanischen Druckkraft, die auf einen Werkstoff, welcher die erfindungsgemäßen piezochromer Farbstoffe umfasst, wirkt.

Bei der Verwendung von thermochromen Farbstoffen für die Stoffe und Stoffzusammensetzungen der Farbpigmente findet eine Farbänderung aufgrund einer Temperaturänderung des die Füllstoffe umgebenden Mediums, wie beispielsweise der umliegenden Luft statt. Dieser Farbwechsel kann ebenfalls für Markierungen, Beschriftungen usw. eingesetzt werden.

Hydrochrome, piezochrome, photochrome, thermochrome oder phosphoreszierende Farbstoffe sind vorzugsweise in den erfindungsgemäßen Digital- oder 3D-Druckverfahren einsetzbar, mit denen dünne Schichten dieser Stoffe als Funktionsschicht auf Holzwerkstoffe aufgebracht werden können.

In einer weiteren Ausführungsform kann wenigstens eine Funktionsschicht der erfindungsgemäßen flächigen Bodenbeläge, Wand- und/oder Deckenverkleidungen für Innenräume einen Sensor für einen Wärmemelder umfassen, der mittels Digital- oder 3D-Druck aufgebracht worden ist. Dabei kann in der wenigstens einen Funktionsschicht eine Leiterbahn aus einem elektrisch leitenden Material, vorzugsweise in Schleifen, aufgedruckt worden sein. Solch ein Wärmemelder funktioniert nach dem Prinzip eines linearen Wärmemelders. Hierbei wird mit Hilfe des aufgedruckten schleifenartigen Sensors eine Temperaturerhöhung detektiert. Eine Temperaturänderung hat eine Widerstandsänderung zwischen den verbundenen Schleifen innerhalb des Sensors zur Folge. Wenn die Temperatur steigt, fällt der Widerstand (Heißleiter). Dieser Unterschied macht sich an der Auswerteinheit bemerkbar, die über einen herkömmlichen Adapter an den erfindungsgemäßen flächigen Bodenbeläge, Wand- und/oder Deckenverkleidungen angeschlossen sein kann, die bei der voreingestellten Alarmschwelle eine Alarmmeldung ausgibt.

Durch Bereitstellung der erfindungsgemäßen flächigen Bodenbeläge, Wand- und/oder Deckenverkleidungen treten nun beispielsweise sicherheitstechnische oder ökologische Aspekte mit unterschiedlichsten Funktionalitäten neben die bisher propagierten dekorativen Aspekte.

Wie bereits erwähnt, ist es auch denkbar, dass die funktionalisierten flächigen Bodenbeläge, Wand- und/oder Deckenverkleidungen der Erfindung mehrere Funktionsschichten umfassen, wobei die Funktionsschichten gleich oder unterschiedlich sein können. Dadurch ergeben sich mehrere Vorteile. Zum einen ist eine Mehr- bzw. Multifunktionalität möglich. Es müssen keine separaten Vorrichtungen installiert werden, wie z.B. eine Fußbodenheizung, Einbruchsmelder oder leuchtende Hinweisschilder. Diese Funktionen können alle in ein und demselben Element für flächige Bodenbeläge, Wand- und/oder Deckenverkleidungen integriert werden. Dies führt zur Einsparung von Kosten, Material und Energie. Des Weiteren kann die Steuerung der funktionalisierten Elemente über Remote Control erfolgen, d.h. die Zusatzfunktionen sind einzeln oder zusammen mit in den Innenräumen anliegenden Informationssystemen vernetz- und bestenfalls mit vorhandenen informationsverarbeitenden Geräten, beispielsweise einem Smartphone, steuerbar ausgeführt.

Entsprechend wird ein Verfahren zur Erzeugung von Funktionsschichten auf Trägermaterialien zur Verfügung gestellt, wobei die Funktionsschichten mit einem analogen Drucker, vorzugsweise mit einem Digitaldrucker und/oder einen 3D-Drucker auf die Trägermaterialien aufgebracht werden.

Wenn die Funktionsschichten in dem erfindungsgemäßen Verfahren mit einem analogen Drucker auf die Trägermaterialien aufgebracht werden, erfolgt dies vorzugsweise mittels Siebdruck oder der indirekte Tiefdruck.

Das in dem vorliegenden Verfahren verwendete Trägermaterial kann ausgewählt sein aus einer Gruppe enthaltend Papier, Glass, Metall, Folien, Holzwerkstoffe, insbesondere MDF- oder HDF-Platten, Furniere, Lackschichten, Kunststoffplatten und anorganische Trägerplatten, wie z.B: Zementspan-, Zementfaser- und Gipsfaser-Platten.

Vorzugsweise kommen Holzwerkstoffplatten, insbesondere Holzfaserwerkstoffplatten zum Einsatz.

Erfindungsgemäß wird deshalb ein Verfahren zum Bedrucken von Holzwerkstoffplatten, insbesondere von Holzfaserwerkstoffplatten, bereitgestellt,
umfassend die Schritte
a) Aufbringen wenigstens einer ersten Funktionsschicht auf die Holzwerkstoffplatten mittels eines analogen Druckers, Digitaldruckers und/oder 3D-Druckers, und
b) Aufbringen wenigstens einer Dekorschicht auf die wenigstens eine erste Funktionsschicht mittels eines analogen Druckers, Digitaldruckers und/oder 3D-Druckers.

Die gleiche Vorgehensweise kann benutzt werden, wenn nicht nur eine, sondern mehrere Funktionsschichten auf die Holzwerkstoffplatten aufgebracht werden sollen. Vorzugsweise können ein bis fünf, mehr bevorzugt ein bis drei, und am meisten bevorzugt eine oder zwei weitere Funktionsschichten auf die Holzwerkstoffplatten aufgetragen werden.

Das erfindungsgemäße Verfahren umfasst dann die Schritte:
a) Aufbringen wenigstens einer ersten Funktionsschicht auf die Holzwerkstoffplatten mittels eines analogen Druckers, Digitaldruckers und/oder 3D-Druckers,
b) Aufbringen wenigstens einer Dekorschicht auf die wenigstens eine erste Funktionsschicht mittels eines analogen Druckers, Digitaldruckers und/oder 3D-Druckers, und
c) Aufbringen wenigstens einer weiteren Funktionsschicht mittels eines analogen Druckers, Digitaldruckers und/oder 3D-Druckers.

In einer Ausführungsform des vorliegenden Verfahrens wird auf die zu bedruckende Seite der Holzwerkstoffplatte vor dem Bedrucken mindestens eine Grundierungsschicht umfassend mindestens ein Harz und/oder mindestens einen Lack aufgetragen, die anschließend angetrocknet und/oder angehärtet wird.

Vorzugsweise wird die zu bedruckende Seite der Holzwerkstoffplatte vor dem Auftragen der Grundierung angeschliffen.

Zur Grundierung kann eine wässrige Harzlösung und/oder eine strahlenhärtbare Spachtelmasse auf die zu bedruckende Seite des Trägermaterials aufgetragen werden. Als Grundierungsmittel sind z.B. wässrige Harzlösungen wie Melamin-Formaldehyd-Harz, Harnstoff-Formaldehyd-Harz oder Melamin-Harnstoff-Formaldehyd-Harz einsetzbar. Es ist ebenfalls möglich, das Trägermaterial mit 1 K/2K-Acrylat-, UV- und/oder ESH-Spachtel vor zu beschichten bzw. zu grundieren und anschließend diese Grundierungsschicht entsprechend auszuhärten.

Vorzugsweise wird für die Vorbeschichtung bzw. Grundierung der Holzwerkstoffplatte eine wässrige Harzlösung verwendet, die eine wässrige Harzlösung, insbesondere eine wässrige Lösung eines Melamin-Formaldehyd-Harzes, Harnstoff-Formaldehyd-Harzes oder Melamin-Harnstoff-Formaldehyd-Harz.

Die Auftragsmenge an flüssiger Harzlösung zur Grundierung kann zwischen 10 und 80 g/m², bevorzugt 20 und 50 g/m² betragen. Der Feststoffgehalt der wässrigen Harzlösung liegt zwischen 30 und 80%, bevorzugt 40 und 60%, insbesondere bevorzugt bei 55%. Das Flüssigharz kann zusätzlich geeignete Netzmittel, Härter, Trennmittel und Entschäumer enthalten.

Nach Auftragen der wässrigen Harzlösung auf die Holzwerkstoffplatte zur Vorbeschichtung bzw. Grundierung derselbigen wird das Flüssigharz auf eine Feuchte von 10%, bevorzugt 6% z.B. in einem Konvektionsofen oder Nahinfrarot-Ofen getrocknet.

In einer anderen Ausführungsform des vorliegenden Verfahrens kann die Holzwerkstoffplatte mit 1K/2K-Acrylat-, und/oder ESH-Spachtel vorbeschichtet bzw. grundiert werden. Eine UV-Spachtelmasse besteht vorteilhafterweise im Wesentlichen aus UV-härtbaren Lackkomponenten, Pigmenten, Reaktivverdünner und Radikalbildnern als Kettenstarter. Ein ESH-Spachtel enthält ebenfalls alle diese Komponenten bis auf den Radikalbildner.

Die Auftragsmenge der Spachtelmasse kann in diesem Fall 50 bis 150 g/m², bevorzugt 50 bis 100 g/m² betragen.Die Mengenangaben beziehen sich dabei auf eine 100%ige Spachtelmasse.

Ebenfalls ist es möglich, dass die zur Grundierung verwendete Spachtelmasse pigmentiert vorliegt, wodurch das Druckergebnis variiert oder verbessert werden kann.

Besonders bevorzugt gemäß der Erfindung ist die Vorbeschichtung der Holzwerkstoffplatte mit einer transparenten Grundierung.

In einer weiteren Ausführungsform des vorliegenden Verfahrens kann vor dem Bedrucken der mindestens einen Seite der Holzwerkstoffplatte mindestens eine Schicht einer pigmentierten Grundierung, die vorzugsweise wasserbasiert ist, auf die zu bedruckende Seite der Holzwerkstoffplatte aufgetragen werden. Die pigmentierte Grundierung kann entweder direkt auf die unbehandelte Oberfläche der Werkstoffplatte oder auch auf die vorherige, vorzugsweise transparente Grundierung aufgetragen werden.

Die wasserbasierte pigmentierte Grundierung kann auch in mehr als einer Schicht aufgetragen werden (z.B. 3 bis 10 Schichten, bevorzugt 5 bis 8 Schichten, besonders bevorzugt 7 Schichten), wobei nach jedem Schichtauftrag die pigmentierte Grundierung z.B. in einem Konvektionstrockner oder einem Nahinfrarot-Trockner getrocknet wird. Die wasserbasierte pigmentierte Grundierung enthält vorzugsweise mindestens ein Pigment einer hellen Farbe, besonders bevorzugt mindestens ein Weißpigment.

Weißpigmente sind unbunte anorganische Pigmente mit einem hohen Brechungsindex (größer als 1,8), die vor allem zur Erzeugung von optischer Weiße in Anstrichmitteln oder als Füllstoff in z. B. Kunststoffen verwendet werden. Weißpigmente gemäß der Erfindung können ausgewählt sein aus der Gruppe umfassend Titandioxid, Lithopone, Bariumsulfat, Zinkoxid, Zinksulfid und Calciumsulfat. Lithopone ist ein Weißpigment, das Bariumsulfat und Zinksulfid beinhaltet.

Die wasserbasierte pigmentierte Grundierung dient vor allem dazu, zwischen einzelnen Elementen des Trägermaterials auftretende Farbunterschiede auszugleichen, was zu einer Verbesserung der Qualität der nachfolgend aufgebrachten Schichten, insbesondere der Dekorschicht, führt.

In einer bevorzugten Ausführungsform umfasst das erfindungsgemäße Verfahren die Schritte:
a) Auftragen einer Grundierung auf die Holzwerkstoffplatten,
b) Optional Auftragen einer pigmentierten Grundierung auf die Holzwerkstoffplatten,
c) Aufbringen wenigstens einer ersten Funktionsschicht auf die Holzwerkstoffplatten mittels eines analogen Druckers, Digitaldruckers und/oder 3D-Druckers,
d) Aufbringen wenigstens einer Dekorschicht auf die wenigstens eine erste Funktionsschicht mittels eines analogen Druckers, Digitaldruckers und/oder 3D-Druckers, und
e) Optional, Aufbringen wenigstens einer weiteren Funktionsschicht mittels eines analogen Druckers, Digitaldruckers und/oder 3D-Druckers auf die Dekorschicht.

Vorzugsweise kann nach dem Aufbringen jeder der zuvor genannten Schichten ein Trockenschritt erfolgen.

Als Druckmotive für den Digitaldruck der Dekorschicht können typischerweise verschiedene Dekore wie z.B. Holz-, Fliesen-, Fantasiedekore oder Parkettimitate eingesetzt werden.

Im Digitaldruck wird zum Bedrucken der mindestens einen Seite der Holzwerkstoffplatte mit einem Dekor bevorzugt eine wasserbasierte Digitaldrucktinte verwendet. Der Digitaldruck kann unter Verwendung eines Digitaldruckers mit einer wasserbasierten Digitaldrucktinte, einer UV- oder lösungsmittelbasierten Tinte ausgeführt werden. Bevorzugt ist die Verwendung einer wasserbasierten Digitaldrucktinte. Die Menge an verwendeter Digitaldrucktinte kann zwischen 5 und 15 g/m², bevorzugt 6 und 8 g/m² betragen.

Die für die Herstellung der Funktionsschichten notwendigen Materialien können dabei in eine Flüssigkeit eingearbeitet sein. Es ist aber auch möglich, dass die verwendete Tinte selbst die Funktionsschicht darstellt. Eine weitere Möglichkeit ist, dass die Flüssigkeit lediglich zur homogeneren Verteilung der Funktionsschicht dient und nach dem Auftrag verdunstet oder abtragbar ist. Falls nötig kann die Tinte auch ein Bindemittel enthalten.

Eine Tinte zur Erzeugung von Leitfähigkeit in einer Funktionsschicht enthält beispielweise Silbernanopartikel, ein organisches Lösemittel und Wasser. Das organische Lösemittel basiert beispielsweise auf Triethylenglycol. Eine andere Tinte, die ebenfalls eine elektrische Leitfähigkeit erzeugen soll, aber für eine Widerstandsheizung genutzt werden soll, enthält beispielsweise Kohlenstoffnanopartikel, Etylenglycol und Wasser.
Entsprechend einer weiteren Ausführungsform wird durch das vorliegende Verfahren eine Schutzschicht auf einer digital bedruckten Holzwerkstoffplatte bereitgestellt, die gleichzeitig als Vermittler, so genannter Primer, zwischen an sich nicht verträglichen Schichten, wie dem Dekordruck bzw. der Dekorschicht einerseits und einem nachfolgenden Verschleißschutz oder anderen Veredlungsschichten andererseits angeordnet ist.

Auf den Digitaldruck der zuletzt aufgetragenen Funktions- oder Dekorschicht kann vorliegend entweder ein Harz, bevorzugt ein wasserverträgliches Harz, ein strahlenhärtbarer, typischerweise nicht wasserverträglicher Lack, z.B. ausgewählt aus der Gruppe der Acrylate, modifizierte Acrylate und/oder Epoxide; oder auch Polyurethane, die über gute Haftungseigenschaften verfügen, unmittelbar aufgetragen werden. Nach Anhärten oder Angelieren der Schutzschicht ist eine Zwischenlagerung der bedruckten Platten ohne Gefahr einer Oberflächenverletzung oder Verschmutzung der Dekorschicht möglich. Somit sind selbst bei undefinierten Zeitabständen zwischen einem Bearbeitungsschritt Digitaldekordruck und einem weiter bearbeitenden Schritt keine Probleme, wie Verschmutzungen von Platten oder Abrieb und/oder Ablösung des Dekors zu erwarten. Damit ist auch sichergestellt, dass bei einer Betriebsunterbrechung in der Weiterverarbeitung der Digitaldrucker seine Arbeit nicht einstellen muss.

In einer Ausführungsform umfasst die auf die zuletzt aufgetragene Funktions- oder Dekorschicht der Holzwerkstoffplatte aufzutragende Schutzschicht mindestens ein wasserverträgliches Harz, bevorzugt ein Formaldehyd-haltiges Harz, insbesondere bevorzugt Melamin-Formaldehyd-Harz, Harnstoff-Formaldehyd-Harz und/oder Melamin-Harnstoff-Formaldehyd-Harz. Das Harz kann demnach in flüssiger Form oder aber auch in fester Form aufgetragen werden, wobei die Verwendung eines flüssigen Harzes bevorzugt ist.

Im Anschluss wird die das mindestens eine wasserverträgliche Harz umfassende Schutzschicht soweit vorgetrocknet bis das Harz noch fließfähig und vernetzbar ist. Das Antrocknen der ein wasserverträgliches Harz enthaltenden Schutzschicht erfolgt typischerweise in einem kontinuierlichen Trockenofen, wie diese aus der Holzwerkstoffplatten-Herstellung bekannt sind. In Abhängigkeit von der Auftragsmenge kann der Prozess der Vortrocknung 5 bis 15 Sekunden, bevorzugt 5 bis 10 Sekunden dauern.

Wird ein strahlenhärtbarer Lack als Schutzschicht verwendet, kann das sich dem Auftrag der Schutzschicht anschließende Angelieren der Schutzschicht unter Verwendung von UV-Strahlung (z.B. bei 320-400 nm), ESH-Strahlung und/oder NIR-Strahlung erfolgen. Nach dem Angelieren weist der Lack bevorzugt einen Polymerisationsgrad zwischen 20 - 60%, bevorzugt 30-50% auf.

In einer weitergehenden Variante des vorliegenden Verfahrens wird die auf die bedruckte Seite der Holzwerkstoffplatte aufzutragende Schutzschicht in einer Menge zwischen 5 und 50 g/m², bevorzugt 8 und 30 g/m², insbesondere bevorzugt 10 und 20 g/m² aufgetragen.

Es ist ebenfalls möglich, auf das Dekor bzw. die Dekore bzw. die Funktionsschicht mindestens eine Schutzschicht, insbesondere eine Schicht umfassend abriebfeste Partikel, natürliche Fasern, synthetische Fasern und/oder weitere Additive aufzutragen, wobei Harze wie Melamin-Formaldehyd-Harz, oder Harnstoff-Formaldehyd-Harz, Acrylat- und Polyurethanharze als geeignete Bindemittel zum Einsatz kommen können.

In einer weiteren Ausführungsform des erfindungsgemäßen Verfahrens werden auf das Dekor bzw. die Dekore mehrere Schutzschichten aufgetragen, die unterschiedliche Zusätze umfassen können.

In einer bevorzugten Ausführungsform umfasst das erfindungsgemäße Verfahren deshalb zusätzlich die Schritte:
a) Aufbringen einer ersten Harzschicht, die abriebfeste Partikel enthält, auf die mit dem Dekor und/oder der Funktionsschicht versehene Seite der Holzwerkstoffplatte,
b) Trocknen der ersten Harzschicht auf eine Restfeuchte von 3 % bis 6 %; und/oder
c) Aufbringen einer zweiten Harzschicht auf die mit dem Dekor und/oder der Funktionsschicht versehene Seite der Holzwerkstoffplatte, die Fasern enthält,
d) Trocknen der zweiten Harzschicht auf eine Restfeuchte von 3 % bis 6 %; und/oder
e) Aufbringen einer mindestens dritten Harzschicht, die Glaspartikel enthält, auf die mit dem Dekor und/oder der Funktionsschicht versehene Seite der Holzwerkstoffplatte,
f) Trocknen der dritten Harzschicht auf eine Restfeuchte von 3% bis 6%; und
g) Verpressen des Schichtaufbaus unter Druck- und Temperatureinfluss zur Ausbildung eines Laminats.

Die abriebfesten Partikel sind bevorzugt ausgewählt aus der Gruppe enthaltend Aluminiumoxide, Korund, Borcarbide, Siliziumdioxide, Siliziumcarbide und Glaspartikel. Als natürliche und/oder synthetische Fasern kommen insbesondere Fasern ausgewählt sind aus der Gruppe enthaltend Holzfasern, Zellulosefasern, Wollfasern, Hanffasern und organische oder anorganische Polymerfasern zum Einsatz.

Als Additive können leitfähige Substanzen, Flammschutzmittel, luminiszierende Stoffe und Metalle zugegeben werden. Dabei können die leitfähigen Substanzen ausgewählt sein aus der Gruppe enthaltend Russ, Kohlefasern, Metallpulver und Nanopartikel, insbesondere Kohlenstoffnanoröhren. Es können auch Kombinationen dieser Substanzen zum Einsatz kommen. Als Flammschutzmittel werden bevorzugt Phosphate, Borate, insbesondere Ammoniumpolyphosphat, Tris(tri-bromneopentyl)phosphat, Zinkborat oder Borsäurekomplexe von mehrwertigen Alkoholen verwendet. Als luminiszierende Stoffe werden bevorzugt fluoreszierende und/oder phosphoreszierende Stoffe auf anorganischer oder organischer Basis, insbesondere Zinksulfid und Erdalkalialuminate.

Vorzugsweise sind zur Erhöhung der Abriebfestigkeit Korundpartikel in der ersten Harzschicht enthalten. Dies ist insbesondere bei der Verwendung als Fußbodenpaneel wichtig, um den hohen Belastungen, denen ein Fußbodenpaneel ausgesetzt ist, standhalten zu können. Als Korund kommt beispielsweise eine Mischung aus üblichen silanisierten Korunden unterschiedlicher Körnung zum Einsatz. Das Korund kann dem Harz vor dem Auftragen einfach beigegeben werden.

Als Fasern in der zweiten Harzschicht werden vorzugsweise Zellulosefasern verwendet. Dazu können handelsüblichen Fasern verwendet werden, die ebenfalls den aufzubringenden Harzschichten beigegeben werden können.

Bei den in der dritten Harzschicht enthaltenen Glaspartikeln handelt es sich beispielsweise um handelsübliche Mikroglaskugeln. Auch diese können einfach in die aufzubringende Harzschicht eingebracht werden.

Die dritte Harzschicht enthält vorzugsweise einen Anteil von 20 % Glaspartikel. Für die zweite Harzschicht haben sich etwa 5 % Zellulose als vorteilhaft erwiesen. Die erste Harzschicht enthält insbesondere 20 % Korundpartikel.

In einer weiteren Ausführungsform des erfindungsgemäßen Verfahrens können auch auf die Unterseite der Holzwerkstoffplatte eine oder mehrere Harzschichten als so genannter Gegenzug aufgebracht werden. Dadurch werden insbesondere die durch die auf der Oberseite der Holzwerkstoffplatte aufgebrachten Harzschichten wirkenden Zugkräfte ausgeglichen. In einer besonders bevorzugten Ausführungsform werden die jeweils an der Ober- und Unterseite aufgebrachten Harzschichten in gleicher Menge aufgetragen bzw. der auf die Unterseite der Holzwerkstoffplatte aufgebrachte Gegenzug entspricht im Schichtaufbau und der jeweiligen Schichtdicke genau der an der Oberseite aufgebrachten Schichtfolge.

Die auf die Unterseite der Holzwerkstoffplatte aufgebrachten Harzschichten können eingefärbt sein.

Allen Harzschichten können Additive wie Härter, Netz- und Trennmittel beigegeben werden.

Die Harzschichten auf der Ober- und der Unterseite der Holzwerkstoffplatte können eine 60%ige Kunstharzlösung enthalten.

Das Trocknen auf eine Restfeuchte von 3 % bis 6 % dient dazu, den Vernetzungsprozess der aufgebrachten Harzschichten zu unterbinden.

In einer weiteren Ausführungsform des vorliegenden Verfahrens wird das bedruckte und ggf. mit einer oder mehreren Schutzschicht(en) versehene Trägermaterial in einer Kurztakt-Presse weiterbearbeitet bzw. veredelt. Unter Druck- und Temperatureinfluss in einer Kurztakt-Presse schmelzen die Harzschichten wieder auf. Der Vernetzungsprozess setzt sich dadurch fort. Die einzelnen Harzschichten werden somit nicht nur in sich sondern auch untereinander vernetzt. Im Ergebnis können die aufgebrachten Melaminharzschichten unter Einschluss des Dekors vernetzt und zu einem Laminat ausgehärtet werden. Übliche Kurztakt-Pressen arbeiten beispielsweise bei einem Druck von 30 bis 60 kg/cm², einer Temperatur an der Holzwerkstoffoberfläche von etwa 165°C und einer Presszeit von 6 bis 12 Sekunden.

Während der Weiterverarbeitung in der Kurztakt-Presse können unter Verwendung eines strukturierten Pressblechs auch Oberflächenstrukturen in mindestens einer Oberfläche, vorzugsweise mindestens der Oberseite des Trägermaterials wie einer Holzwerkstoffplatte erzeugt werden, die optional auf das Dekor abgestimmt ausgeführt sein können (so genannte dekorsynchrone Struktur). Vorzugsweise sind die Oberflächenstrukturen weitgehend deckungsgleich zum Dekor ausgebildet. In diesem Fall spricht man von Embossed-In-Register Strukturen Bei Holzdekoren können die Strukturen in Form von Porenstrukturen vorliegen, die der Maserung folgen. Bei Fliesendekoren können die Strukturen Vertiefungen im Bereich von dem Dekor umfasster Fugenfüllungslinien sein.

In einer besonders bevorzugten Ausführungsform umfasst das erfindungsgemäße Verfahren die Schritte:
a) Auftragen einer Grundierung auf die Holzwerkstoffplatten,
b) Optional Auftragen einer pigmentierten Grundierung auf die Holzwerkstoffplatten,
c) Aufbringen wenigstens einer ersten Funktionsschicht auf die Holzwerkstoffplatten mittels eines analogen Druckers, Digitaldruckers und/oder 3D-Druckers,
d) Aufbringen wenigstens einer Dekorschicht auf die wenigstens eine erste Funktionsschicht mittels eines analogen Druckers, Digitaldruckers und/oder 3D-Druckers, und
e) Optional, Aufbringen wenigstens einer weiteren Funktionsschicht mittels eines analogen Druckers, Digitaldruckers und/oder 3D-Druckers auf die Dekorschicht.
f) Auftragen mindestens einer Schutzschicht a) enthaltend mindestens ein Harz, oder b) mindestens einen strahlenhärtbaren Lack und/oder c) mindestens ein Polyurethan auf die Dekorschicht; und
g) a) Antrocknen und/oder b) Angelieren der auf der Dekorschicht aufgetragenen Schutzschicht; und optional
h) Erzeugung einer Struktur in der Oberfläche der Schutzschicht a) durch Wirkung von Wärme und Druck in einer Presse, b) mit einer Strukturwalze und vollständiges Aushärten des Lackes.

Im Fall von großformatigen Platten können im Anschluss kleinformatige Elemente, Paneele, z.B. durch Fräsen erzeugt. Dabei werden auch die Kontaktstellen zur Verbindung der einzelnen Elemente miteinander bzw. zur Vernetzung mit vorhandenen Systemen aufgebracht. Dies kann ebenfalls durch ein Druckverfahren oder durch Anbringen von leitfähigen Folien usw. geschehen. Die Anbindung an Steuerungssysteme kann dann über jede mögliche Art eines herkömmlichen Adapters, wie zum Beispiel WLAN-Adapter, NFC-Chip, RFID oder Bluetooth-Modul erfolgen.

In einer ganz besonders bevorzugten Ausführungsform umfasst das erfindungsgemäße Verfahren die Schritte:
a) Auftragen einer Grundierung auf die Holzwerkstoffplatten,
b) Optional Auftragen einer pigmentierten Grundierung auf die Holzwerkstoffplatten,
c) Aufbringen wenigstens einer ersten Funktionsschicht auf die Holzwerkstoffplatten mittels eines analogen Druckers, Digitaldruckers und/oder 3D-Druckers,
d) Aufbringen wenigstens einer Dekorschicht auf die wenigstens eine erste Funktionsschicht mittels eines analogen Druckers, Digitaldruckers und/oder 3D-Druckers, und
e) Optional Aufbringen wenigstens einer weiteren Funktionsschicht mittels eines analogen Druckers, Digitaldruckers und/oder 3D-Druckers auf die Dekorschicht.
f) Auftragen mindestens einer Schutzschicht enthaltend a) mindestens ein Harz, b) mindestens einen strahlenhärtbaren Lack und/oder c) mindestens ein Polyurethan auf die Dekorschicht; und
g) a) Antrocknen und/oder b) Angelieren der auf der Dekorschicht aufgetragenen Schutzschicht;
h) Optional Erzeugung einer Struktur in der Oberfläche der Schutzschicht a) durch Wirkung von Wärme und Druck in einer Presse, b) mit einer Strukturwalze und vollständiges Aushärten des Lackes,
i) Erzeugung kleinformatige Elemente, wie zum Beispiel Paneele, z.B. durch Fräsen
j) Anbringen der Kontaktstellen zur Verbindung der einzelnen Elemente miteinander bzw. zur Vernetzung mit vorhandenen Systemen, beispielsweise mittels eines Digital- oder 3D-Druckers.

Die vorliegende Erfindung stellt weiterhin eine Vorrichtung zur Durchführung des Verfahrens zur Erzeugung von Funktionsschichten auf Trägermaterialien zur Verfügung, wobei die Vorrichtung mindestens eine Druckstraße mit mindestens einem analogen Drucker, Digitaldrucker oder 3D-Drucker zum Bedrucken mindestens einer Seite des Trägermaterials mittels Siebdruck, indirektem Tiefdruck oder Digital- und/oder 3D-Drucktechnik unter Ausbildung einer ersten Funktionsschicht und einer Dekorschicht umfasst.

Die Ausbildung der einen ersten Funktionsschicht und der Dekorschicht kann wahlweise mit ein und demselben analogen Drucker, Digital- oder 3D-Drucker oder mit zwei verschiedenen analogen Druckern, Digital- oder 3D-Druckern erfolgen. Gleichermaßen kann die Ausbildung weiterer Funktionsschichten, beispielsweise von ein, zwei, drei, vier oder fünf weiteren Funktionsschichten, vorzugsweise von ein bis drei weiteren Funktionsschichten, besonders bevorzugt von ein oder zwei weiteren Funktionsschichten mit dem gleichen analogen Drucker, Digital- oder 3D-Drucker oder mit verschiedenen analogen Druckern, Digital- und/oder 3D-Druckern erfolgen. Die erfindungsgemäße Vorrichtung kann deshalb optional mehrere weitere analogen Drucker, Digitaldrucker und/oder 3D-Drucker umfassen. Die Vorrichtung umfasst vorzugsweise insgesamt zwei oder drei Digital- und/oder 3D-Drucker für die Ausbildung der unterschiedlichen Funktions- und Dekorschichten. In einer weiteren bevorzugten Ausführungsform umfasst die erfindungsgemäße Vorrichtung jeweils einen separaten analogen Drucker, Digital- oder 3D-Drucker für die Ausbildung jeder einzelnen Dekor- und/oder Funktionsschicht.

In einer weiteren Variante umfasst die vorliegende Vorrichtung mindestens ein Mittel oder eine Vorrichtung zum Aufbringen einer Grundierung auf das Trägermaterial.

In einer bevorzugten Variante umfasst die erfindungsgemäße Vorrichtung mindestens ein Mittel oder eine Vorrichtung zum Auftragen einer pigmentierten Grundierung, die vorzugsweise wasserbasiert ist, auf das Trägermaterial.

In einer weitergehenden Variante umfasst die vorliegende Vorrichtung mindestens ein Mittel zum Aufbringen mindestens einer Schutzschicht auf das mit dem jeweiligen Druckdekor versehene Trägermaterial. Dieses Mittel bzw. Vorrichtung zum Aufbringen einer Schutzschicht ist vorzugsweise im Anschluss an die mindestens eine Druckstraße angeordnet.

Vorzugsweise enthält die Vorrichtung mehrere Mittel zum Aufbringen mehrerer Schutzschichten auf das mit dem jeweiligen Druckdekor versehene Trägermaterial. In einer besonders bevorzugten Ausführungsform enthält die Vorrichtung zwei, drei oder vier Mittel zum Aufbringen von zwei, drei bzw. vier Schutzschichten auf das mit dem jeweiligen Druckdekor versehene Trägermaterial.

Die erfindungsgemäße Vorrichtung kann auch zusätzlich ein oder mehrere Mittel zum Auftragen von einer oder mehreren Harzschichten an der Unterseite des Trägermaterials umfassen. Wenn die Ober- und die Unterseite des Trägermaterials mit Schutzschichten versehen werden sollen, können die Mittel zum Auftragen der Schutzschichten beispielsweise als Doppelauftragsvorrichtungen ausgeführt sein.

In einer bevorzugten Ausführungsform weist die vorliegende Vorrichtung mindestens eine Kurztaktpresse zum Verpressen des mit dem Druckdekor versehenen Trägermaterials und der darauf angeordneten Schutzschicht auf.

Die vorliegende Erfindung stellt weiterhin eine funktionalisierte Holzwerkstoffplatte, vorzugsweise eine Holzfaserplatte bereit, die nach dem erfindungsgemäßen Verfahren hergestellt wurde.

Der Aufbau der funktionalisierten Holzwerkstoffplatte umfasst eine Trägerplatte, wenigstens eine Funktionsschicht, wenigstens eine Dekorschicht und wenigstens eine Schutzschicht. Optional kann die erfindungsgemäße Holzwerkstoffplatte mehrere Funktionsschichten, beispielsweise zwei bis fünf, vorzugsweise zwei bis vier oder zwei bis drei, besonders bevorzugt zwei Funktionsschichten umfassen.

Die Holzwerkstoffplatte kann auch mehr als eine Dekorschicht, vorzugsweise zwei oder drei Dekorschichten umfassen.

Die Schutzschicht der erfindungsgemäßen Holzwerkstoffplatte ist vorzugsweise wie oben für das Verfahren beschreiben ausgeführt. In einer besonders bevorzugten Ausführungsform weist die Schutzschicht eine strukturierte Oberfläche auf. Vorzugsweise sind die Oberflächenstrukturen weitgehend deckungsgleich zum Dekor ausgebildet. In diesem Fall spricht man von Embossed-In-Register Strukturen Bei Holzdekoren können die Strukturen in Form von Porenstrukturen vorliegen, die der Maserung folgen. Bei Fliesendekoren können die Strukturen Vertiefungen im Bereich von dem Dekor umfasster Fugenfüllungslinien sein.

Das erfindungsgemäße Verfahren zum Aufbringen von Funktionsschichten mittels Digital- und/oder 3D-Druckern und die erfindungsgemäße Vorrichtung, umfassend wenigstens einen Digital- und/oder 3D-Drucker sind generell dazu geeignet, die verschiedensten flächigen Materialien mit einer oder mehreren funktionalen Schichten zu versehen, wie z.B. Kunststoffe, Holz, Glas, Metalle, Stein, Papier usw.. In einer bevorzugten Ausführungsform können mit dem erfindungsgemäße Verfahren und der erfindungsgemäßen Vorrichtung beispielsweise Laminate, Möbelplatten, Fronten von Möbeln, Arbeitsplatten, Türfronten aber auch Tapeten und Glasflächen von Fenstern mit einer oder mehreren Funktionsschichten versehen werden. Besonders bevorzugt ist die Herstellung von funktionalisierten Holzwerkstoffplatten, insbesondere Holzfaserwerkstoffplatten für die Herstellung von Laminaten für Bodenbeläge, Wand- und/oder Deckenverkleidungen.

Die Erfindung betrifft weiterhin funktionalisierte flächigen Materialien, die eine oder mehrere Funktionsschichten umfassen, wobei die Funktionsschichten mittels Digital- und/oder 3D-Druck hergestellt worden sind und wobei die flächigen Materialien ausgewählt sein können aus z.B. Kunststoffen, Holz, Glas, Metallen, Stein, Papier usw.. In einer bevorzugten Ausführungsform betrifft die Erfindung Laminate, Möbelplatten, Fronten von Möbeln, Arbeitsplatten, Türfronten, Tapeten und Glasflächen, beispielsweise von Fenstern, die eine oder mehreren Funktionsschichten umfassen, wobei die Funktionsschichten mittels Digital- und/oder 3D-Druck hergestellt worden sind.

Die Erfindung betrifft weiterhin die Verwendung von flächigen Materialien, wie z.B. Laminaten, Möbelplatten, Fronten von Möbeln, Arbeitsplatten, Türfronten, Tapeten und Glasflächen, beispielsweise von Fenstern, die eine oder mehreren Funktionsschichten umfassen, zur Ausstattung von Gebäuden im Außen- und Innenbereich, vorzugsweise im Innenbereich. Besonders bevorzugt ist die Verwendung von funktionalisierten Holzwerkstoffplatten zur Herstellung flächiger Bodenbeläge, Wand- und Deckenverkleidungen.

In einer weiteren Ausführungsform betrifft die Erfindung funktionalisierte Möbelstücke, Türen, Fenster, Bodenbeläge, Wand- und Deckenverkleidungen usw., die die funktionalisierten flächigen Materialien, wie z.B. Laminate, Möbelplatten, Fronten von Möbeln, Arbeitsplatten, Türfronten, Tapeten und Glasflächen umfassen. Besonders bevorzugt sind funktionalisierte flächige Bodenbelägen, Wand- und Deckenverkleidungen, die funktionalisierte Holzwerkstoffplatten, vorzugsweise funktionalisierte Holzfaserwerkstoffplatten, umfassen.

Die Erfindung wird nachfolgend unter Bezugnahme auf zwei Zeichnungen und anhand von Ausführungsbeispielen näher erläutert.

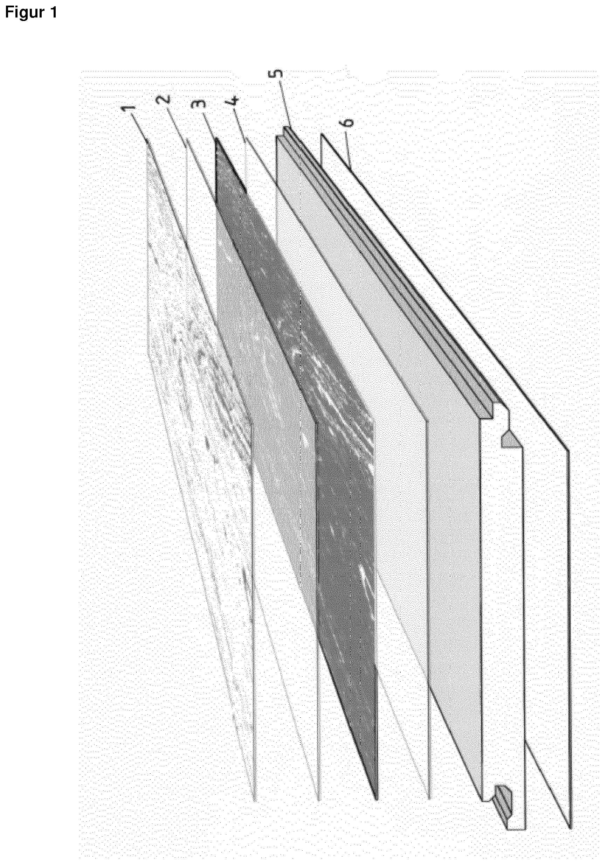

**Figur 1** zeigt den Aufbau einer erfindungsgemäßen funktionalisierten Holzwerkstoffplatte in einer perspektivischen Ansicht. Die Holzwerkstoffplatte umfasst eine Trägerplatte 5, die vorzugsweise als Holzfaserwerkstoffplatte, besonders bevorzugt als Paneel ausgebildet sein kann. Die Trägerplatte **5** ist auf der Unterseite mit einem Gegenzug **6** versehen. Der Gegenzug **6** kann eine oder mehrere Harzschichten umfassen. Dadurch können insbesondere die durch die auf der Oberseite der Holzwerkstoffplatte aufgebrachten Harzschichten wirkenden Zugkräfte ausgeglichen werden. Auf der Trägerplatte **5** ist in dem vorliegenden Beispiel zunächst eine erste Funktionsschicht **4** aufgebracht. Auf der ersten Funktionsschicht **4** ist wenigstens eine Dekorschicht **3** aufgebracht, gefolgt von einer weiteren Funktionsschicht **2.** Die Funktionsschichten **2** und **4** können zum Beispiel ausgeführt sein als:
- ein Latentwärmespeicher mit Phasenwechselmaterialien,
- eine Fussbodenheizung auf Basis einer Widerstandsheizung,
- eine Beleuchtung auf Basis von Elektrolumineszenz, wie z.B. zinksulfidische Luminophore,
- Einbruchssensor auf Basis piezoelektrischer Elemente,
- Farbanpassung auf Basis thermochromer Pigmente,
- Unfall-/Einbruchsmelder auf Basis piezochromer Pigmente,
- Feuermelder auf Basis Widerstandsänderung.

Die Dekorschicht **3** kann optisch typischerweise Nachbildungen verschiedene Dekore wie z.B. Holz-, Fliesen-, Fantasiedekore oder Parkettimitate umfassen.

Die Holzwerkstoffplatte umfasst weiterhin eine Schutzschicht **1.** Diese Schutzschicht **1** kann eine oder mehrere Harzschichten mit oder ohne Zusatzstoffen und/oder Additiven, wie herein beschrieben, umfassen. Die Schutzschicht **1** kann wahlweise eine strukturierte Oberfläche aufweisen. Vorzugsweise sind die Oberflächenstrukturen dabei weitgehend deckungsgleich zum Dekor ausgebildet. In diesem Fall spricht man von Embossed-In-Register-Strukturen. Bei Holzdekoren können die Strukturen in Form von Porenstrukturen vorliegen, die der Maserung folgen. Bei Fliesendekoren können die Strukturen Vertiefungen im Bereich von dem Dekor umfasster Fugenfüllungslinien sein

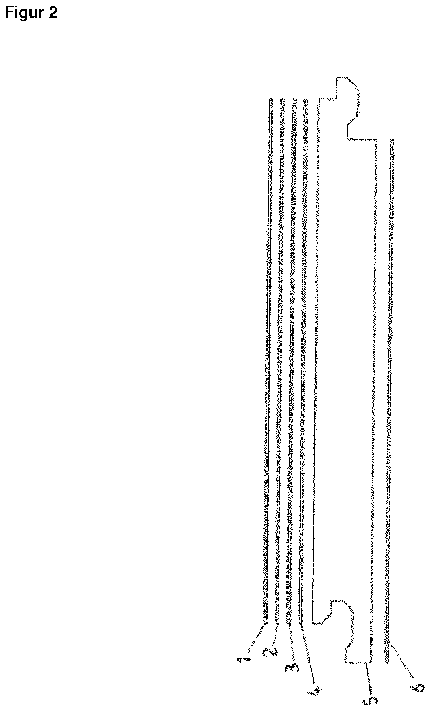

Figur **2** zeigt den gleichen Aufbau eine erfindungsgemäßen Holzwerkstoffplatte wie in Figur **1** beschrieben in der Vorderansicht, umfassend eine Trägerplatte **5**, einen Gegenzug **6**, eine erste Funktionsschicht **4**, eine Dekorschicht **3**, eine weitere Funktionsschicht **2** und eine Schutzschicht **1.**

### Ausführungsbeispiele

### Beispiel 1 - HDF-Platten mit Fußbodenheizung

In der Produktion wird eine Charge HDF-Platten verarbeitet, die mit einer als Fußbodenheizung ausgebildeten Funktionsschicht versehen werden soll. Der Verfahrensablauf ist dabei folgendermaßen:
- Vereinzelung der HDF-Platten von einem Lagerstapel,
- Anschliff der HDF-Platten auf der Oberseite,
- Auftragen einer transparenten Grundierung bestehend aus Melaminharz,
- Trocknung der Grundierung,
- Auftrag einer mit Titandioxid pigmentierten Grundierung mit Zwischentrocknung (bis zu 7x),
- Aufbringen einer dünnen Schicht einer Tinte mit Kohlenstoffnanopartikeln mittels Digitaldruck zur Ausbildung einer Fußbodenheizung als Funktionsschicht (Auftragsmenge: 3 -50 g Pigment/m²), flächig oder streifenförmig,
- Trocknung der Funktionsschicht,
- Digitaldruck eines Fliesendekors,
- Trocknung,
- Auftrag eines Transportschutzes bestehend aus Melaminharz,
- Trocknung

### Beispiel 2 - HDF-Platten mit Beleuchtung auf Basis von Elektrolumineszenz

In der Produktion wird eine Charge HDF-Platten verarbeitet, die mit einer in der Funktionsschicht befindlichen Beleuchtung auf Basis von Elektrolumineszenz versehen werden soll. Der Verfahrensablauf ist dabei folgendermaßen:
- Vereinzelung der HDF-Platten von einem Lagerstapel,
- Anschliff der HDF-Platten auf der Oberseite,
- Auftragen einer transparenten Grundierung bestehend aus Melaminharz,
- Trocknung der Grundierung,
- Auftrag einer mit Titandioxid pigmentierten Grundierung mit Zwischentrocknung (bis zu 7x),
- Digitaldruck einer mit Mangan dotierten Zinksulfid-Dispersion, zur Ausbildung einer lumineszierenden Funktionsschicht,
- Trocknung der Funktionsschicht,
- Digitaldruck eines Holzdekors,
- Trocknung,
- Auftrag eines Transportschutzes bestehend aus Melaminharz,
- Trocknung

### Beispiel 3 - HDF-Platten mit stromleitender Zwischenschicht

In der Produktion wird eine Charge HDF-Platten verarbeitet, die mit einer als Fußbodenheizung ausgebildeten Funktionsschicht versehen werden soll. Der Verfahrensablauf ist dabei folgendermaßen:
- Vereinzelung der HDF-Platten von einem Lagerstapel,
- Anschliff der HDF-Platten auf der Oberseite,
- Auftragen einer transparenten Grundierung bestehend aus Melaminharz,
- Trocknung der Grundierung,
- Auftrag einer mit Titandioxid pigmentierten Grundierung mit Zwischentrocknung (bis zu 7x),
- Aufbringen einer dünnen Schicht einer Tinte mit Silbernanopartikeln mittels Digitaldruck zur Ausbildung einer Fußbodenheizung als Funktionsschicht (Auftragsmenge je nach benötigter Stromleitung: 3 -50 g Pigment/m²),
- Trocknung der Funktionsschicht,
- Digitaldruck eines Fliesendekors,
- Trocknung,
- Auftrag eines Transportschutzes bestehend aus Melaminharz,
- Trocknung

### Weitere Verarbeitung der HDF-Platten

Die Platten aus Beispiel 1 und 2 wurden anschließend auf der bedruckten Seite mit einer ersten Schicht aus Melaminharz, die 20 % Korundpartikel enthielt, beschichtet und anschließend in einem Trockenofen auf eine Restfeuchte von 5 - 7 % getrocknet.

Danach wurden alle Platten auf der bedruckten Seite mit einer zweiten Schicht aus Melaminharz, die 5 % Zellulosefasern enthielt, beschichtet und anschließend in einem Trockenofen auf eine Restfeuchte von 5 - 7 % getrocknet.

Danach wurden alle Platten auf der bedruckten Seite mit einer dritten Melaminharzschicht, die 20 % Mikroglaskugeln enthielt, beschichtet und in einem Trockenofen ebenfalls auf eine Restfeuchte von 5 -7 % getrocknet.

Parallel wurde zu dem Auftrag auf der Oberseite auch ein flüssiger Gegenzug auf der Unterseite aufgebracht. Es handelte sich dabei um einen Mehrfachauftrag von Melaminharz mit jeweiliger Zwischentrocknung.

Anschließend erfolgte die Verpressung der drei Melaminharzschichten zu einer beschichteten Platte in einer Kurztakt-Pressen bei einem Druck von 50 kg/cm², einer Temperatur an der Holzwerkstoffoberfläche von etwa 165°C und einer Presszeit von 10 Sekunden.

Die Platten aus Beispiel 1 bis 3 können auch mit einem beharzten Overlay und einem beharzten Gegenzugpapier in einer Kurztaktpresse bei einem Druck von 50 kg/cm², einer Temperatur an der Holzwerkstoffoberfläche von etwa 165°C und einer Presszeit von 14 Sekunden zu einer beschichteten Platte verpresst werden.

Nach der Verpressung wurde die Wirksamkeit der Funktionsschicht durch eine Messung geprüft. Im Fall des Ausführungsbeispiels 1 wurde ein Muster gezogen und der Stromfluss zwischen zwei Messpunkten nach Einbringen von zwei Elektroden in Bohrungen in die stromführende Schicht gemessen. Der Abstand der Elektroden betrug ca. 20 cm, was der Breite einer Standarddiele entspricht. Es wurde eine Spannung von 24 Volt bei 0,5 Ampere angelegt. Zusätzlich wurde mit Hilfe eines Infrarotmessgerätes die Temperaturerhöhung an der Oberfläche bestimmt. Es ergab sich eine Temperaturerhöhung um 3 °C

Im Fall des Beispiels 3 wurde ebenfalls eine Elektrode in die eine Bohrung eingebracht und in die andere Bohrung ein Verbraucher (Glühlampe). Nach dem Anlegen des Stroms leuchtete die Glühlampe.

Abschließend wurden aus den Platten an einer Fußbodenlinie Paneele erzeugt. An den Paneelen wurden Kontaktstellen zur Verbindung der einzelnen Elemente miteinander und zur Anbindung an Steuerungssysteme für Innenräume angebracht.

### Beispiel 4: Stromübertragung

Platten bzw. Paneele, die beispielweise nach einem der Beispiele 1 bis 3 hergestellt worden sind, wurden zur Stromübertragung mit einer Substanz ausgerüstet, die eine genügend hohe Leitfähigkeit besitzt.

Diese wurden entweder in einer Tasche unterhalb der Oberfläche oder in der Fase platziert. Die Leitfähigkeit wurde durch Ruß, Salze oder leitfähige Polymere erzeugt.

Folgende Substanzen wurden mit leitfähigen Substanzen ausgerüstet (in Klammern ist die bevorzugte Anwendung aufgeführt):
- Acrylatlacke (Fase)
- PU-Lacke (Fase)
- Polyolefin-Haftschmelzkleber (Leimtasche)
- Polythiophene, Polypyrrole (Fase)

Nach dem Aufbringen auf die Fase wurde nachträglich noch eine Versiegelung gegen Abrieb/Verschmutzung aufgetragen. Diese Versiegelung erfolgte mittels ungefüllter Lacke.

Die Substanzen härteten zähelastisch aus, sodass auch bei Dimensionsänderungen der Holzwerkstoffträgerplatte auf Grund von Schrumpfen oder Quellen bei Änderung der Umgebungsfeuchte noch ein ausreichender Kontakt zwischen den einzelnen Dielen erhalten blieb.

### Liste der Bezugszeichen

- 1: Schutzschicht
- 2: Zweite Funktionsschicht
- 3: Dekorschicht
- 4: Erste Funktionsschicht
- 5: Trägerplatte
- 6: Gegenzug

## Patentansprüche

1. Verfahren zur Erzeugung von Funktionsschichten auf einem Trägermaterial, wobei das Trägermaterial ausgewählt ist aus der Gruppe enthaltend Papier, Glas, Metall, Folien, Furniere, Lackschichten, Kunststoffplatten, wood plastic composites (WPC) und anorganische Trägerplatten, wie Zementspan-, Zementfaser-, Gipsfaser-und Magnesiumoxidplatten, umfassend die Schritte
a) Auftragen einer Grundierung auf das Trägermaterial,
b) Optional Auftragen einer pigmentierten Grundierung auf das Trägermaterial,
c) Aufbringen wenigstens einer ersten Funktionsschicht (4) auf das Trägermaterialmittels eines 3D-Druckers,
d) Aufbringen wenigstens einer Dekorschicht (3) auf die wenigstens eine erste Funktionsschicht (4) mittels eines analogen Druckers, Digitaldruckers und/oder 3D-Druckers,
e) Optional, Aufbringen wenigstens einer weiteren Funktionsschicht (2) mittels eines 3D-Druckers auf die Dekorschicht (3),
f) Auftragen mindestens einer Schutzschicht (1)
a) enthaltend mindestens einen strahlenhärtbaren Lack und/oder
b) mindestens ein Polyurethan auf die Dekorschicht (3); und
g) Angelieren der auf der Dekorschicht (3) aufgetragenen Schutzschicht (1);
und optional
h) Erzeugung einer Struktur in der Oberfläche der Schutzschicht (1) mit einer Strukturwalze und vollständiges Aushärten des Lackes,
wobei die wenigstens eine erste Funktionsschicht (4) und/oder die wenigstens eine weitere Funktionsschicht (2) ausgewählt sind aus
- einem Latentwärmespeicher mit Phasenwechselmaterialien,
- einer Fussbodenheizung auf Basis einer Widerstandsheizung,
- einer Beleuchtung auf Basis von Elektrolumineszenz, wie z.B. zinksulfidische Luminophore,
- einem Einbruchssensor auf Basis piezoelektrischer Elemente,
- einer Farbanpassung auf Basis thermochromer Pigmente,
- einem Unfall-/Einbruchsmelder auf Basis piezochromer Pigmente, oder
- einem Feuermelder auf Basis Widerstandsänderung;
und wobei die Funktionsschichten keine Armierungslage umfassen.

2. Verfahren nach Anspruch 1, **dadurch gekennzeichnet, dass** die wenigstens eine erste Funktionsschicht (4) und die wenigstens eine weitere Funktionsschicht (2) die gleiche Funktion oder unterschiedliche Funktionen aufweisen.

3. Verfahren nach einem der vorhergehenden Ansprüche, **dadurch gekennzeichnet, dass** in Verfahrensschritt a) auf die zu bedruckende Seite des Trägermaterials eine Grundierungsschicht umfassend mindestens ein Harz und/oder mindestens einen Lack aufgetragen wird, die anschließend angetrocknet und/oder angehärtet wird.

4. Verfahren nach einem der vorhergehenden Ansprüche, **dadurch gekennzeichnet, dass** in Verfahrensschritt b) mindestens eine Schicht einer pigmentierten Grundierung auf die zu bedruckende Seite des Trägermaterials aufgetragen wird.

5. Verfahren nach einem der vorhergehenden Ansprüche, **dadurch gekennzeichnet, dass** zum Aufbringen der wenigstens einer ersten Funktionsschicht (4) in Verfahrensschritt c) und/oder der wenigstens einen Dekorschicht (3) in Verfahrensschritt d) und/oder der wenigstens einen weiteren Funktionsschicht (2) in Verfahrensschritt e) eine wasserbasierte, UV-basierte oder lösungsmittelbasierte Digitaldrucktinte verwendet wird.

6. Verfahren nach einem der Ansprüche 1 bis 4, **dadurch gekennzeichnet, dass** die für die Funktion notwendigen Materialien in der wenigstens einen ersten Funktionsschicht (4) und/oder in der wenigstens einen weiteren Funktionsschicht (2) in einer druckbaren Flüssigkeit eingearbeitet sind.

7. Verfahren nach einem der Ansprüche 1-6, **dadurch gekennzeichnet, dass** die auf die Dekorschicht (3) des Trägermaterials aufzutragende mindestens eine Schutzschicht (1) gemäß Verfahrensschritt f) a) mindestens einen strahlenhärtbaren Lack ausgewählt aus der Gruppe der Acrylate, modifizierte Acrylate und/oder Epoxide, oder gemäß Verfahrensschritt f) c) mindestens ein Polyurethan ausgewählt aus der Gruppe enthaltend aliphatische Urethane oder eine Mischung aus mindestens einem strahlungshärtbaren Lack und mindestens einem Polyurethan umfasst.

8. Verfahren nach einem der vorherigen Ansprüche, weiter umfassend die Schritte:
- Erzeugung kleinformatige Elemente, wie zum Beispiel Paneele, aus dem Trägermaterial, und
- Anbringen von Kontaktstellen zur Verbindung der einzelnen Elemente miteinander bzw. zur Vernetzung mit vorhandenen Steuerungssystemen mittels eines analogen Druckers, Digital- oder 3D-Druckers.

9. Vorrichtung zur Durchführung des Verfahrens zur Erzeugung von Funktionsschichten auf einem Trägermaterial gemäß einem der Ansprüche 1 bis 8, umfassend mindestens eine Druckstraße mit mindestens einem 3D-Drucker zum Bedrucken mindestens einer Seite des Trägermaterials mittels 3D-Drucktechnik unter Ausbildung wenigstens einer Funktionsschicht (4) und mindestens einen analogen Drucker, Digitaldrucker oder 3D-Drucker zum Bedrucken mindestens einer Seite des Trägermaterials mittels Siebdruck, indirektem Tiefdruck, Digital und/oder 3D-Drucktechnik unter Ausbildung wenigstens einer Dekorschicht (3).
